# EUROPEAN PATENT APPLICATION

(11) **EP 4 761 214 A1**
(43) Date of publication of application: **17.06.2026**
(21) Application number: 24870066.8
(22) Date of filing: 29.07.2024
(51) Int. Cl.: H04L 65/1016

(54) **COMMUNICATION METHOD AND APPARATUS, AND COMMUNICATION SYSTEM**

(30) Priority: 28.09.2023 CN 202311287552
(71) Applicant: HUAWEI TECHNOLOGIES CO., LTD., Shenzhen 518129 (CN)
(72) Inventor: HU, Xiaokun, Shenzhen, Guangdong 518129 (CN); JI, Mengdi, Shenzhen, Guangdong 518129 (CN); ZUO, Jun, Shenzhen, Guangdong 518129 (CN)
(74) Representative: Pfenning, Meinig & Partner mbB
(86) International application number: PCT/CN2024/108268
(87) International publication number: WO 2025/066513

(57) **Abstract**

This application provides a communication method and apparatus, and a communication system, and relates to the field of communication technologies. In the method, a session description protocol (session description protocol, SDP) offerer and an SDP answerer may negotiate whether a protocol stack for a data channel of an IMS session that the SDP offerer and the SDP answerer participate in includes a datagram transport layer security (datagram transport layer security, DTLS) protocol, to adapt to communication scenarios having different security requirements, and to improve communication flexibility. The SDP offerer is a terminal in the IMS session, and the SDP answerer is another terminal in the IMS session. Alternatively, the SDP offerer is a terminal in the IMS session, and the SDP answerer is a network device in a communication network in which the IMS session is located. Alternatively, the SDP offerer is a network device in a communication network in which the IMS session is located, and the SDP answerer is a terminal in the IMS session.

## Description

This application claims priority to Chinese Patent Application No. 202311287552.0, filed with the China National Intellectual Property Administration on September 28, 2023 and entitled "COMMUNICATION METHOD AND APPARATUS, AND COMMUNICATION SYSTEM", which is incorporated herein by reference in its entirety.

### TECHNICAL FIELD

This application relates to the field of communication technologies, and in particular, to a communication method and apparatus, and a communication system.

### BACKGROUND

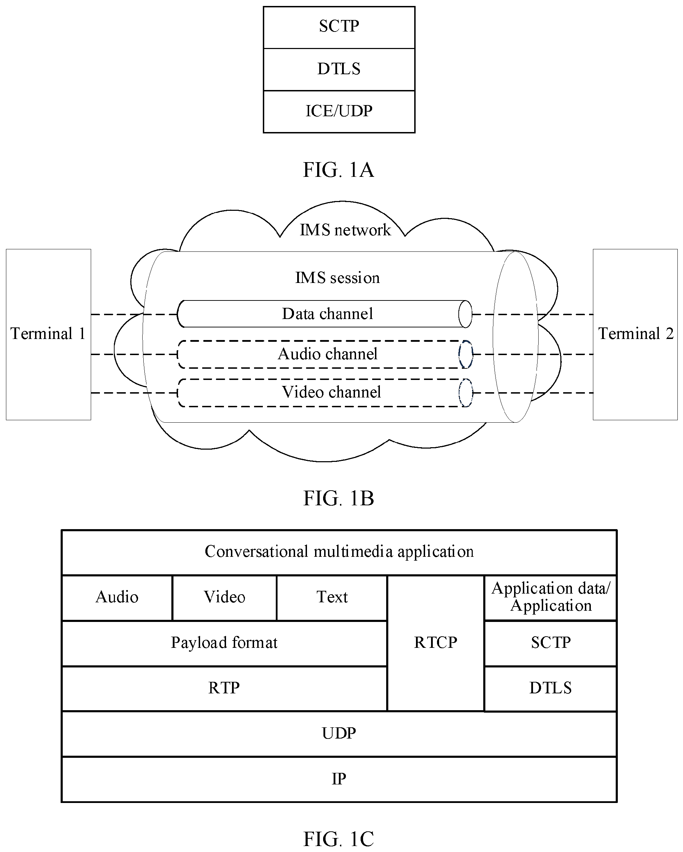

Web real-time communication (web real-time communication, WebRTC) is a real-time communication technology, which allows a network application or a website to establish a peer-to-peer (peer-to-peer, P2P) connection between browsers, to implement transmission of an audio stream, a video stream, or any data other than the audio stream and the video stream. The audio stream and/or the video stream may be transmitted in a media channel, and the data may be transmitted in a data channel (data channel, DC). The data channel may be referred to as a WebRTC data channel. For the WebRTC data channel, a stream control transmission protocol (stream control transmission protocol, SCTP) over datagram transport layer security (datagram transport layer security, DTLS) over a user datagram protocol (user datagram protocol, UDP) may be used as a bearer protocol. In addition, interactive connectivity establishment (interactive connectivity establishment, ICE) is used to implement network address translation (network address translation, NAT) traversal, to cause two communication parties to perceive an IP (Internet Protocol) address and a port of each other, as shown in FIG. 1A.

To transmit the data other than the audio stream and the video stream on an internet protocol multimedia subsystem (internet protocol multimedia subsystem, IMS) network, a data communication channel is introduced in 3rd generation partnership project (3rd generation partnership project, 3GPP) release 16 (release 16) for the IMS network, and is referred to as an IMS data channel (IMS data channel, IMS DC). For the IMS data channel, a protocol stack similar to that of the WebRTC data channel, that is, the SCTP over the DTLS over the UDP, is used as a bearer protocol. However, such a fixed protocol stack makes the IMS data channel meet only monotonous security requirements, and flexibility is poor.

### SUMMARY

This application provides a communication method and apparatus, and a communication system, to negotiate whether a protocol stack for a data channel of an IMS session includes a DTLS protocol, to adapt to communication scenarios having different security requirements, to improve communication flexibility.

To achieve the foregoing objective, the following technical solutions are used in this application.

According to a first aspect, a communication method is provided. The method may be performed by a first communication entity; may be performed by a module, for example, a chip, a chip system, or a circuit, used in the first communication entity; or may be implemented by a logical node, a logical module, or software that can implement all or some of functions of the first communication entity. This is not limited herein. For ease of description, an example in which the communication method is performed by the first communication entity is used below for description. It may be understood that the first communication entity is a session description protocol (session description protocol, SDP) answerer.

The method includes: The first communication entity receives SDP offer information from a second communication entity, and sends SDP answer information to the second communication entity based on the SDP offer information. The SDP offer information indicates that the second communication entity offers to use a first-type protocol stack or a second-type protocol stack to establish a data channel. The SDP answer information indicates that the first communication entity determines to use the second-type protocol stack to establish the data channel. The data channel is associated with an IMS session between the first communication entity and the second communication entity. The first-type protocol stack includes a datagram transport layer security DTLS protocol. The second-type protocol stack does not include the DTLS protocol.

According to the method provided in the first aspect, the first communication entity and the second communication entity may negotiate whether a used protocol stack for the data channel of the IMS session that the first communication entity and the second communication entity participate in includes the DTLS protocol, so that the data channel is applicable to different communication scenarios. For example, in a scenario in which a requirement on communication security is high or encryption based on the DTLS protocol is needed, the protocol stack for the data channel may include the DTLS protocol; and in a scenario in which a requirement on communication security is not high or encryption based on the DTLS protocol is not needed, the protocol stack for the data channel may not include the DTLS protocol. Therefore, according to the method provided in the first aspect, communication flexibility can be improved. In addition, if a result of negotiation between the first communication entity and the second communication entity is that the protocol stack for the data channel does not include the DTLS protocol, data transmitted in the data channel does not need to be processed based on the DTLS protocol. For example, the data does not need to be encrypted based on the DTLS protocol, to reduce a quantity of encryption times. Therefore, according to the method provided in the first aspect, data transmission efficiency can be further improved, a data transmission delay can be shortened, and performance overheads of a network device can be reduced.

In a possible implementation, the first-type protocol stack is a UDP/DTLS/SCTP protocol stack, and the second-type protocol stack is a UDP/SCTP protocol stack.

Based on the foregoing possible implementation, the first communication entity and the second communication entity may negotiate whether to use the UDP/DTLS/SCTP protocol stack or the UDP/SCTP protocol stack protocol stack to establish the data channel. The UDP/DTLS/SCTP protocol stack may be alternatively replaced with an SCTP over DTLS over UDP protocol stack, an SCTP over DTLS protocol stack encapsulated based on a UDP, an SCTP/DTLS/UDP protocol stack, or the like, and may be understood as a protocol stack of an SCTP over the DTLS protocol over the UDP. The UDP/SCTP protocol stack may be alternatively replaced with an SCTP over UDP protocol stack, an SCTP protocol stack encapsulated based on the UDP, or an SCTP/UDP protocol stack, and may be understood as a protocol stack of the SCTP over the UDP.

In a possible implementation, the SDP offer information includes first indication information, and the first indication information indicates that the first-type protocol stack or the second-type protocol stack is used to establish the data channel.

Based on the foregoing possible implementation, the first communication entity may determine, by using the first indication information, that the first communication entity offers to use the first-type protocol stack or the second-type protocol stack to establish the data channel.

In a possible implementation, the SDP offer information includes an m line corresponding to the data channel, and the m line includes the first indication information.

Based on the foregoing possible implementation, the first communication entity may determine, by using the first indication information in the m line corresponding to the data channel included in the SDP offer information, that the first communication entity offers to use the first-type protocol stack or the second-type protocol stack to establish the data channel. Optionally, the m line corresponding to the data channel may be included in an SDP media description included in the SDP offer information.

In a possible implementation, the first indication information indicates that the first-type protocol stack is used to establish the data channel, and the first indication information is "UDP/DTLS/SCTP" or "SCTP/DTLS/UDP"; or the first indication information indicates that the second-type protocol stack is used to establish the data channel, and the first indication information is "UDP/SCTP" or "SCTP/UDP".

Based on the foregoing possible implementation, when the first indication information is "UDP/DTLS/SCTP" or "SCTP/DTLS/UDP", the first communication entity may determine that the second communication entity offers to use the first-type protocol stack to establish the data channel; or when the first indication information is "UDP/SCTP" or "SCTP/UDP", the first communication entity may determine that the second communication entity offers to use the second-type protocol stack to establish the data channel.

In a possible implementation, the SDP answer information includes second indication information, and the second indication information indicates that it is determined that the second-type protocol stack is used to establish the data channel.

Based on the foregoing possible implementation, the first communication entity may indicate, to the second communication entity by using the second indication information included in the SDP answer information, that a used protocol stack for establishing the data channel is determined.

In a possible implementation, the SDP answer information includes an m line corresponding to the data channel, and the m line included in the SDP answer information includes the second indication information.

Based on the foregoing possible implementation, the first communication entity may indicate, to the second communication entity by using the second indication information in the m line that corresponds to the data channel and that is included in the SDP answer information, that a used protocol stack for establishing the data channel is determined. Optionally, the m line corresponding to the data channel may be included in an SDP media description included in the SDP answer information.

In a possible implementation, the second indication information is "UDP/SCTP" or "SCTP/UDP".

Based on the foregoing possible implementation, when the first communication entity determines to use the second-type protocol stack to establish the data channel, the second indication information is "UDP/SCTP" or "SCTP/UDP".

In a possible implementation, the method further includes: The first communication entity receives policy information from a call session control function entity, where the policy information is for the first communication entity to determine a protocol stack for establishing the data channel.

Based on the foregoing possible implementation, the first communication entity may determine, based on the SDP offer information and the policy information, the protocol stack for establishing the data channel.

In a possible implementation, the policy information is carried in a response message whose status code is 200.

Based on the foregoing possible implementation, the first communication entity may receive the policy information by using the response message whose status code is 200, to obtain the policy information through an existing procedure.

In a possible implementation, the policy information is included in a Feature-Caps field or a Contact field of the response message.

Based on the foregoing possible implementation, the policy information may be carried in the Feature-Caps field or the Contact field included in the response message whose status code is 200.

In a possible implementation, the first communication entity determines, based on the first-type protocol stack or the second-type protocol stack offered by the second communication entity and the policy information, to use the second-type protocol stack to establish the data channel.

Based on the foregoing possible implementation, the first communication entity may determine, based on the SDP offer information and the policy information, to use the second-type protocol stack to establish the data channel.

In a possible implementation, the data channel is an auxiliary data channel or a standalone data channel.

Based on the foregoing possible implementation, the first communication entity and the second communication entity may negotiate whether a used protocol stack for the auxiliary data channel of the IMS session that the first communication entity and the second communication entity participate in includes the DTLS protocol, or negotiate whether a used protocol stack for the standalone data channel of the IMS session that the first communication entity and the second communication entity participate in includes the DTLS protocol.

According to a second aspect, a communication method is provided. The method may be performed by a second communication entity; may be performed by a module, for example, a chip, a chip system, or a circuit, used in the second communication entity; or may be implemented by a logical node, a logical module, or software that can implement all or some of functions of the second communication entity. This is not limited herein. For ease of description, an example in which the communication method is performed by the second communication entity is used below for description. It may be understood that the second communication entity is an SDP offerer.

The method includes: The second communication entity sends SDP offer information to a first communication entity, and receives SDP answer information from the first communication entity. The SDP offer information indicates that the second communication entity offers to use a first-type protocol stack or a second-type protocol stack to establish a data channel. The SDP answer information indicates that the first communication entity determines to use the second-type protocol stack to establish the data channel. The data channel is associated with an IMS session between the first communication entity and the second communication entity. The first-type protocol stack includes a datagram transport layer security DTLS protocol. The second-type protocol stack does not include the DTLS protocol.

According to the method provided in the second aspect, the first communication entity and the second communication entity may negotiate whether a used protocol stack for the data channel of the IMS session that the first communication entity and the second communication entity participate in includes the DTLS protocol, so that the data channel is applicable to different communication scenarios. For example, in a scenario in which a requirement on communication security is high or encryption based on the DTLS protocol is needed, the protocol stack for the data channel may include the DTLS protocol; and in a scenario in which a requirement on communication security is not high or encryption based on the DTLS protocol is not needed, the protocol stack for the data channel may not include the DTLS protocol. Therefore, according to the method provided in the second aspect, communication flexibility can be improved. In addition, if a result of negotiation between the first communication entity and the second communication entity is that the protocol stack for the data channel does not include the DTLS protocol, data transmitted in the data channel does not need to be processed based on the DTLS protocol. For example, the data does not need to be encrypted based on the DTLS protocol, to reduce a quantity of encryption times. Therefore, according to the method provided in the second aspect, data transmission efficiency can be further improved, a data transmission delay can be shortened, and performance overheads of a network device can be reduced.

In a possible implementation, the first-type protocol stack is a UDP/DTLS/SCTP protocol stack, and the second-type protocol stack is a UDP/SCTP protocol stack.

Based on the foregoing possible implementation, the first communication entity and the second communication entity may negotiate whether to use the UDP/DTLS/SCTP protocol stack or the UDP/SCTP protocol stack to establish the data channel. The UDP/DTLS/SCTP protocol stack may be alternatively replaced with an SCTP over DTLS over UDP protocol stack, an SCTP over DTLS protocol stack encapsulated based on a UDP, an SCTP/DTLS/UDP protocol stack, or the like, and may be understood as a protocol stack of an SCTP over the DTLS protocol over the UDP. The UDP/SCTP protocol stack may be alternatively replaced with an SCTP over UDP protocol stack, an SCTP protocol stack encapsulated based on the UDP, or an SCTP/UDP protocol stack, and may be understood as a protocol stack of the SCTP over the UDP.

In a possible implementation, the SDP offer information includes first indication information, and the first indication information indicates that the first-type protocol stack or the second-type protocol stack is used to establish the data channel.

Based on the foregoing possible implementation, the second communication entity may offer, to the first communication entity by using the first indication information included in the SDP offer information, to use the first-type protocol stack or the second-type protocol stack to establish the data channel.

In a possible implementation, the SDP offer information includes an m line corresponding to the data channel, and the m line includes the first indication information.

Based on the foregoing possible implementation, the second communication entity may offer, to the first communication entity by using the first indication information in the m line corresponding to the data channel included in the SDP offer information, to use the first-type protocol stack or the second-type protocol stack to establish the data channel. Optionally, the m line corresponding to the data channel may be included in an SDP media description included in the SDP offer information.

In a possible implementation, the first indication information indicates that the first-type protocol stack is used to establish the data channel, and the first indication information is "UDP/DTLS/SCTP" or "SCTP/DTLS/UDP"; or the first indication information indicates that the second-type protocol stack is used to establish the data channel, and the first indication information is "UDP/SCTP" or "SCTP/UDP".

Based on the foregoing possible implementation, when the second communication entity offers to use the first-type protocol stack to establish the data channel, the first indication information is "UDP/DTLS/SCTP" or "SCTP/DTLS/UDP"; or when the second communication entity offers to use the second-type protocol stack to establish the data channel, the first indication information is "UDP/SCTP" or "SCTP/UDP".

In a possible implementation, the SDP answer information includes second indication information, and the second indication information indicates that it is determined that the second-type protocol stack is used to establish the data channel.

Based on the foregoing possible implementation, the second communication entity may determine, by using the second indication information included in the SDP answer information, that the first communication entity determines a used protocol stack for establishing the data channel.

In a possible implementation, the SDP answer information includes an m line corresponding to the data channel, and the m line included in the SDP answer information includes the second indication information.

Based on the foregoing possible implementation, the second communication entity may determine, by using the second indication information in the m line that corresponds to the data channel and that is included in the SDP answer information, that the first communication entity determines a used protocol stack for establishing the data channel. Optionally, the m line corresponding to the data channel may be included in an SDP media description included in the SDP answer information.

In a possible implementation, the second indication information is "UDP/SCTP" or "SCTP/UDP".

Based on the foregoing possible implementation, when the second indication information is "UDP/SCTP" or "SCTP/UDP", the second communication entity determines that the first communication entity determines to use the second-type protocol stack to establish the data channel.

In a possible implementation, the method further includes: The second communication entity receives policy information from a call session control function entity, where the policy information is for the second communication entity to determine a protocol stack that is offered to be used to establish the data channel.

Based on the foregoing possible implementation, the second communication entity may determine, based on the policy information, whether to offer to use the first-type protocol stack or the second-type protocol stack to establish the data channel.

In a possible implementation, the policy information is carried in a response message whose status code is 200.

Based on the foregoing possible implementation, the second communication entity may receive the policy information by using a response message whose status code is 200, to obtain the policy information through an existing procedure.

In a possible implementation, the policy information is included in a Feature-Caps field or a Contact field of the response message.

Based on the foregoing possible implementation, the policy information may be carried in the Feature-Caps field or the Contact field included in the response message whose status code is 200.

In a possible implementation, the data channel is an auxiliary data channel or a standalone data channel.

Based on the foregoing possible implementation, the first communication entity and the second communication entity may negotiate whether a used protocol stack for the auxiliary data channel of the IMS session that the first communication entity and the second communication entity participate in includes the DTLS protocol, or negotiate whether a used protocol stack for the standalone data channel of the IMS session that the first communication entity and the second communication entity participate in includes the DTLS protocol.

According to a third aspect, a communication method is provided. The method may be performed by a call session control function (call session control function, CSCF) entity; or may be performed by a module, for example, a chip, a chip system, or a circuit, used in the CSCF entity; or may be implemented by a logical node, a logical module, or software that can implement all or some functions of the CSCF entity. This is not limited herein. For ease of description, an example in which the communication method is performed by the CSCF entity is used below for description. For example, the CSCF entity may be specifically a serving CSCF (serving CSCF, S-CSCF) entity. The method includes: determining policy information, where the policy information is for a communication entity to determine a protocol stack that is offered to be used to establish a data channel, or for a communication entity to determine a protocol stack for establishing a data channel, and the data channel is associated with an IMS session that the communication entity participates in; and sending the policy information to the communication entity.

According to the method provided in the third aspect, the CSCF entity may send the policy information to the communication entity (for example, a terminal), so that the communication entity may determine, based on the policy information, the protocol stack that is offered to be used to establish the data channel, or determine, based on the policy information, a protocol stack that is used to establish the data channel.

In a possible implementation, the policy information is carried in a response message whose status code is 200.

Based on the foregoing possible implementation, the CSCF entity may send the policy information to the communication entity by using the response message whose status code is 200, to deliver the policy information through an existing procedure.

In a possible implementation, the policy information is included in a Feature-Caps field or a Contact field of the response message.

Based on the foregoing possible implementation, the CSCF entity may deliver the policy information by using the Feature-Caps field or the Contact field included in the response message whose status code is 200.

In a possible implementation, the data channel includes an auxiliary data channel and/or a standalone data channel.

Based on the foregoing possible implementation, the CSCF entity may indicate a protocol stack for the auxiliary data channel and/or a protocol stack for the standalone data channel.

According to a fourth aspect, a communication apparatus is provided, to implement the foregoing method. The communication apparatus may be the first communication entity in the first aspect, or an apparatus including the first communication entity, or a module, for example, a chip, a chip system, or a circuit, in the first communication entity in the first aspect, or a logical node, a logical module, or a software implementation that can implement some or all functions of the first communication entity. Alternatively, the communication apparatus may be the second communication entity in the second aspect, or an apparatus including the second communication entity, or a module, for example, a chip, a chip system, or a circuit, in the second communication entity in the second aspect, or a logical node, a logical module, or a software implementation that can implement some or all functions of the second communication entity. Alternatively, the communication apparatus may be the CSCF entity in the third aspect, or an apparatus including the CSCF entity, or a module, for example, a chip, a chip system, or a circuit, in the CSCF entity in the third aspect, or a logical node, a logical module, or a software implementation that can implement some or all functions of the CSCF entity. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus may include a processing module and an interface module. The processing module may be configured to implement a processing function in any one of the foregoing aspects and the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver device, a transceiver, or a communication interface.

With reference to the fourth aspect, in a possible implementation, the interface module includes a sending module and a receiving module that are respectively configured to implement a sending function and a receiving function in any one of the foregoing aspects and the possible implementations of the foregoing aspects.

According to a fifth aspect, a communication apparatus is provided, including a processor. The processor is configured to: after being coupled to a memory and reading instructions in the memory, perform, based on the instructions, the method in any one of the foregoing aspects. The communication apparatus may be the first communication entity in the first aspect, or an apparatus including the first communication entity, or a module, for example, a chip, a chip system, or a circuit, in the first communication entity in the first aspect, or a logical node, a logical module, or a software implementation that can implement some or all functions of the first communication entity. Alternatively, the communication apparatus may be the second communication entity in the second aspect, or an apparatus including the second communication entity, or a module, for example, a chip, a chip system, or a circuit, in the second communication entity in the second aspect, or a logical node, a logical module, or a software implementation that can implement some or all functions of the second communication entity. Alternatively, the communication apparatus may be the CSCF entity in the third aspect, or an apparatus including the CSCF entity, or a module, for example, a chip, a chip system, or a circuit, in the CSCF entity in the third aspect, or a logical node, a logical module, or a software implementation that can implement some or all functions of the CSCF entity.

With reference to the fifth aspect, in a possible implementation, the communication apparatus further includes a memory. The memory is configured to store program instructions and data. Optionally, the memory and the processor are integrated together, or the memory is independent of the processor.

With reference to the fifth aspect, in a possible implementation, the communication apparatus is a chip or a chip system. Optionally, when the communication apparatus is a chip system, the communication apparatus may include a chip; or may include a chip and another discrete component.

According to a sixth aspect, a communication apparatus is provided, including a processor and an interface circuit. The interface circuit is configured to: receive a computer program or instructions, and transmit the computer program or the instructions to the processor. The processor is configured to execute the computer program or the instructions, to cause the communication apparatus to perform the method in any one of the foregoing aspects. The communication apparatus may be the first communication entity in the first aspect, or an apparatus including the first communication entity, or a module, for example, a chip, a chip system, or a circuit, in the first communication entity in the first aspect, or a logical node, a logical module, or a software implementation that can implement some or all functions of the first communication entity. Alternatively, the communication apparatus may be the second communication entity in the second aspect, or an apparatus including the second communication entity, or a module, for example, a chip, a chip system, or a circuit, in the second communication entity in the second aspect, or a logical node, a logical module, or a software implementation that can implement some or all functions of the second communication entity. Alternatively, the communication apparatus may be the CSCF entity in the third aspect, or an apparatus including the CSCF entity, or a module, for example, a chip, a chip system, or a circuit, in the CSCF entity in the third aspect, or a logical node, a logical module, or a software implementation that can implement some or all functions of the CSCF entity.

With reference to the sixth aspect, in a possible implementation, the communication apparatus is a chip or a chip system. Optionally, when the communication apparatus is a chip system, the communication apparatus may include a chip; or may include a chip and another discrete component.

According to a seventh aspect, a computer-readable storage medium is provided. The computer-readable storage medium stores instructions. When the instructions are run on a computer, the computer is caused to perform the method in any one of the foregoing aspects.

According to an eighth aspect, a computer program product including instructions is provided. When the computer program product runs on a computer, the computer is caused to perform the method in any one of the foregoing aspects.

According to a ninth aspect, a communication system is provided. The communication system includes a first communication entity configured to perform the method according to the first aspect and a second communication entity configured to perform the method according to the second aspect.

With reference to the ninth aspect, in a possible implementation, the communication system further includes the CSCF entity configured to perform the method according to the third aspect.

For technical effects achieved by any one of the possible implementations of the fourth aspect to the ninth aspect, refer to technical effects achieved by any one of the first aspect to the third aspect or different possible implementations of any aspects. Details are not described herein again.

It can be understood that the solutions in the foregoing aspects may be combined if the solutions are not contradictory.

### BRIEF DESCRIPTION OF DRAWINGS

FIG. 1A is a diagram of a protocol stack used in WebRTC;
FIG. 1B is a diagram of an IMS session;
FIG. 1C is a first diagram of a protocol stack of an IMS session according to this application;
FIG. 1D is a second diagram of a protocol stack of an IMS session according to this application;
FIG. 2 is a diagram of an architecture of a communication system according to this application;
FIG. 3A is a first diagram of a communication scenario according to this application;
FIG. 3B is a first diagram of a data channel according to this application;
FIG. 3C is a second diagram of a communication scenario according to this application;
FIG. 3D is a second diagram of a data channel according to this application;
FIG. 4 is a diagram of a hardware structure of a communication apparatus according to this application;
FIG. 5 is a first schematic flowchart of a communication method according to this application;
FIG. 6 is a second schematic flowchart of a communication method according to this application;
FIG. 7 is a third schematic flowchart of a communication method according to this application;
FIG. 8A to FIG. 8C are a fourth schematic flowchart of a communication method according to this application; and
FIG. 9 is a diagram of a structure of a communication apparatus according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Terminal

A terminal in this application, for example, a terminal 302, a terminal 303, a terminal 313, or a terminal 314 in the following embodiments, may be referred to as user equipment (user equipment, UE), a terminal apparatus, an access terminal, a subscriber unit, a subscriber station, a mobile station (mobile station, MS), a mobile terminal (mobile terminal, MT), a remote station, a remote terminal, a mobile device, a user terminal, a wireless communication device, a user agent, a user apparatus, or the like, and is a device having a wireless or wired communication capability. For example, the terminal may be connected to a wireless access device via an air interface, or the terminal may be connected to a wired access device via a wired interface. From a perspective of a product form, the terminal may include a handheld device, a vehicle-mounted device, a wearable device, a computing device, or the like having a communication function. For example, the terminal may be a mobile phone (mobile phone), a tablet computer (pad), a computer (for example, a notebook computer or a palmtop computer) with a wireless communication function, a mobile internet device (mobile internet device, MID), a virtual reality (virtual reality, VR) terminal, an augmented reality (augmented reality, AR) terminal, a smartwatch, a smart band, smart glasses, a wireless terminal in industrial control (industrial control), a wireless terminal in self driving (self driving), a wireless terminal in telemedicine (remote medical), a wireless terminal in a smart grid (smart grid), a wireless terminal in transport safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with wireless communication functions, another processing device connected to wireless modems, a terminal in an internet of things (internet of things, IoT) system, a desktop computer, UE defined in 3rd generation partnership project (3rd generation partnership project, 3GPP) standard specification, or the like. This is not limited.

### 2. Call service

A call service in this application is a service in which a terminal as a calling party or a called party participates in a voice call or a video call with one or more other terminals via a communication network (for example, an IMS network). The IMS network is an IP bearer-based open system that provides various multimedia services for users.

In this application, the call service may cover an entire process from a start of dialing to an end of the call, or may cover a part of the process from the start of the dialing to the end of the call, for example, a process from parties that participate in the call service entering a call state to the end of the call. The call service may be a one-to-one call service, or may be a one-to-many (for example, a conference) call service. In this application, the one-to-one call service is used as an example, but all related solutions may be applied to the one-to-many call service.

### 3. IMS session (IMS session)

An IMS session in this application is a session corresponding to a call service, and is used to transmit data in the call service, for example, data between terminals in the call service, and/or data between a terminal in the call service and a communication network. The IMS session may be understood as a logical connection between communication apparatuses in the call service, for example, may be understood as a logical connection between the terminals in the call service, and may transmit the data between the terminals; or may be understood as a logical connection between the terminal in the call service and the communication network, and is used to transmit the data between the terminal and the communication network. In specific application, the IMS session may be negotiated (or established) based on a session initiation protocol (session initiation protocol, SIP)/SDP. It should be understood that the IMS session may also be replaced with a communication session, an IMS communication session, a session, a session of a call service, or the like. This is not limited.

It may be understood that one call service may correspond to at least one IMS session. A call service between a terminal 1 and a terminal 2 is used as an example. The call service corresponds to one IMS session, for example, an IMS session between the terminal 1 and the terminal 2. A call service between the terminal 1, the terminal 2, and a terminal 3 is used as an example. The call service corresponds to one IMS session, for example, an IMS session between the terminal 1, the terminal 2, and the terminal 3. Alternatively, the call service corresponds to three IMS sessions, for example, the IMS session between the terminal 1 and the terminal 2, an IMS session between the terminal 1 and the terminal 3, and an IMS session between the terminal 2 and the terminal 3.

It may be understood that, to transmit various types of data, a channel for transmitting corresponding types of data may be established in an IMS session. For example, channels may be classified into a media channel and a data channel based on data types. In some scenarios, the media channel may be further classified into an audio channel and a video channel. For example, in FIG. 1B, the terminal 1 and the terminal 2 may communicate with each other over an IMS network, and the IMS session between the terminal 1 and the terminal 2 includes a data channel, an audio channel, and a video channel. It should be understood that FIG. 1B shows merely an example of the IMS session. In specific application, the IMS session may include the data channel, but not include the media channel, or the IMS session includes one of the audio channel and the video channel, and the data channel. This is not limited.

In this application, the audio channel may be for transmitting a voice, and the video channel may be for transmitting a video. The following describes the data channel in detail.

### 4. Data channel

Unless otherwise specified, data channels in embodiments of this application, such as a data channel 304 to a data channel 306 and a data channel 315 to a data channel 319 in the following embodiments, are data channels in an IMS network, and are also referred to as IMS data channels. The data channels are associated with an IMS session of a terminal, or are created during the IMS session of the terminal; and may be for transmitting application data or an application (configured to generate/consume application data) related to the terminal during the IMS session.

For example, the data channel in embodiments of this application may be classified into at least the following types based on a relationship between the data channel and an audio cell or a video call.
(1) In an IMS session process, when an audio call or a video call exists between the terminal and another session participant (which may be another terminal or a network element on a network side), a data channel also exists. In this case, the data channel may be referred to as an auxiliary data channel (auxiliary data channel) or a dependent data channel (dependent data channel).
(2) In an IMS session process, when a data channel exists between the terminal and another session participant, no conventional voice call or video call exists. In this case, the data channel may be referred to as a standalone data channel (standalone data channel) or an independent data channel (independent data channel).

Both the auxiliary data channel and the standalone data channel can be for transmitting any type of application data between session participants. For example, in embodiments of this application, uses of the data channel or types of data that may be transmitted in the data channel include at least the following several types.

For example, application data transmitted in the data channel may be interactive application data (interactive application data) that is referred to as interactive data (interactive data) for short. The interactive application data may be application data for supporting an interactive operation (for example, data or code/script for generating a graphical user interface (graphical user interface, GUI), where the GUI is used by a user to perform an interactive operation, for example, a "like" icon or a "red packet" icon), may be application data generated by performing the interaction operation (for example, a control instruction, a control signal, or an output file generated after the session participant performs the interaction operation, for example, a quantity of "likes" and an amount in a "red packet"), or may be data collected or stored by the terminal, for example, data collected by the terminal by using an input/output (input/output, I/O) module, for example, an image or a video photographed by using a camera, a voice collected by using a microphone, text, a symbol, or an emoticon entered by using a keyboard, or data generated by performing an action like tapping/sliding on a touchscreen.

For example, application data transmitted in the data channel may alternatively be communication enhancement application data (communication enhancement application data) that is referred to as communication enhancement data (communication enhancement data) for short. The communication enhancement data may be data generated based on content of an audio call or a video call, for example, a voice in the audio call or the video call is converted into text, or a sign language in the video call is converted into text or a voice; may be data superimposed based on the audio call or the video call, for example, an AR special effect picture; or may be data independent of the audio call or the video call, for example, geographical location data or screen sharing data.

For example, application data transmitted in the data channel may alternatively be a remote control command. In this case, a remote control service or a remote IoT device connection service may be provided for the user. It may be understood that, in the foregoing case, the data channel may also be for transmitting the remote control command.

For example, an application transmitted in the data channel may be an installation package, executable code, or a script of the application. The application may be an interactive enhancement application or a communication enhancement application configured to enhance an interaction effect or a communication effect of a conventional voice call/video call, or may be a remote control application or an IoT communication application. This is not limited in embodiments of this application.

For example, the auxiliary data channel or the standalone data channel may be classified into a bootstrap data channel (bootstrap data channel, BDC) and an application data channel (application data channel, ADC) based on different uses. In this application, the BDC is for obtaining, by the terminal, an application from a data channel server (data channel server, DCS). The ADC is for transmitting application data.

In a possible implementation, a data channel is negotiated (or established) based on the SIP/SDP.

For example, an SDP offerer (SDP offerer) and an SDP answerer (SDP answerer) determine, through a SIP/an SDP media negotiation procedure, IP addresses and ports for transmitting data by the SDP offerer and the SDP answerer, information related to a protocol stack for a data channel, and media information corresponding to the data channel, to establish one or more data channels in an IMS session. The SDP offerer and the SDP answerer are two terminals in a same IMS session. Alternatively, the SDP offerer is a terminal in an IMS session, and the SDP answerer is a network device in a communication network, for example, an IMS application server (application server, AS). Alternatively, the SDP offerer is a network device in a communication network, and the SDP answerer is a terminal in an IMS session.

It may be understood that the SDP offerer and the SDP answerer may negotiate the BDC and the ADC through the SIP/SDP media negotiation procedure, obtain one or more applications from the DCS in the BDC, run an application before, during, or after a call, and transmit application data in the ADC, so that the user experiences more abundant real-time interaction services except a voice call, a video call, and text. It should be understood that the SDP offerer and the SDP answerer may negotiate the BDC and the ADC simultaneously, or negotiate the BDC before negotiating the ADC. This is not limited.

To distinguish the ADC from the BDC, a stream ID (stream ID) of the ADC and a stream ID of the BDC may be set to different values in an SDP message or a SIP message. For example, a value of the stream ID of the BDC is less than 1000, and a value of the stream ID of the ADC is greater than or equal to 1000.

It may be understood that, unless otherwise specified, descriptions of the data channel in this application are all applicable to the auxiliary data channel, the standalone data channel, the BDC, and the ADC. Unified descriptions are provided herein, and details are not described below.

### 5. Protocol stack of an IMS session

In this application, a protocol stack of an IMS session indicates a sum of protocols applicable to the IMS session, and may reflect a data transmission process in the IMS session. As mentioned above, a voice, a video, text, and data other than the voice, the video, and the text may be transmitted in the IMS session. Therefore, to match transmission requirements of different types of data, different protocols may be configured for channels of different types of data. For example, the protocol stack of the IMS session may be shown in FIG. 1C.

In FIG. 1C, a protocol at a bottom layer of the audio channel, the video channel, and the data channel is an internet protocol (internet protocol, IP), and the UDP is over the IP. For the foregoing channels, protocols over the UDP are different. The following separately provides descriptions. For the audio channel or the video channel, a real-time transport protocol (real-time transport protocol, RTP) or an RTP control protocol (RTP control protocol, RTCP) is over the UDP. Voice, video, or text payloads (payloads) may be encapsulated in the RTP, and then a conversational multimedia application (conversational multimedia application) is over the RTP. The conversational multimedia application is also over the RTCP. For the data channel, a DTLS protocol is over the UDP, an SCTP is over the DTLS protocol, the data channel is over the SCTP, and the conversational multimedia application is over the data channel.

### 6. Protocol stack for a data channel

It may be learned from FIG. 1C that the protocol stack for the data channel is an SCTP over DTLS protocol stack encapsulated based on the UDP.

The SCTP is a transport layer protocol widely used in a telecommunication network, and may meet different transmission requirements through configuration. Therefore, compared with other transport layer protocols, the SCTP is more advantageous. For example, Table 1 is a capability comparison table of a transmission control protocol (transmission control protocol, TCP), the UDP, and the SCTP. It may be learned from Table 1 that reliability and a delivery mode of SCTP are configurable. The SCTP further supports traffic control and congestion control. Therefore, the reliability and/or the delivery mode of the SCTP may be configured, so that data transmitted in the data channel meets different transmission requirements. For example, if a real-time requirement is high, and packet loss is sensitive, the data channel may be configured to support an ordered and reliable mode by using the SCTP. In some scenarios, traffic control and/or congestion control may be further superimposed, to further ensure data transmission quality. The DTLS protocol may provide confidentiality and integrity protection for data transmission and provide a bidirectional authentication mechanism for two communication parties to ensure secure data transmission. The UDP is applicable to various networks. Therefore, packets are encapsulated based on the UDP, so that the packets may be transmitted on these networks and can be identified by devices such as routers and NAT devices in the networks. Therefore, for the data channel, the SCTP over the DTLS protocol over the UDP is used as a bearer protocol.

**Table 1**

| | TCP | UDP | SCTP |
|---|---|---|---|
| Reliability | Reliable | Unreliable | Configurable |
| Delivery mode | Ordered delivery | Unordered transmission | Configurable |
| Transmission mode | Byte-oriented transmission | Message-oriented transmission | Message-oriented transmission |
| Traffic control | Supported | Not supported | Supported |
| Congestion control | Supported | Not supported | Supported |

Optionally, in addition to the SCTP, the DTLS protocol, and the UDP, in the data channel, a NAT traversal technology may be used to cause the two communication parties to perceive an IP address and a port of each other. For example, ICE may be integrated with two mechanisms: session traversal utilities for NAT (session traversal utilities for NAT, STUN) and traversal using relays around NAT (traversal using relays around NAT, TURN), to cause the two communication parties to perceive the IP address and the port of each other.

It should be understood that, in specific application, there are a plurality of technologies for implementing NAT traversal, and the ICE is only one of the technologies. Therefore, the ICE may also be replaced with another NAT traversal technology. This is not limited. In addition, the SCTP or the UDP is only a protocol applicable to the data channel and may also be replaced with another protocol. For example, the SCTP may be replaced with a quick UDP network connection (quick UDP internet connection, QUIC).

It may be learned from the foregoing descriptions that the protocol stack for the data channel includes the DTLS protocol, and the DTLS protocol has a function of performing transport layer encryption on data in the data channel. Data transmitted in the data channel is usually user plane data. The data may be encapsulated by using the protocol stack shown in FIG. 1C to obtain an IP data packet. When the IP data packet is transmitted between the terminal and a base station, the IP data packet is further encapsulated by using a packet data convergence protocol (packet data convergence protocol, PDCP). The PDCP also supports encrypted transmission of the data. It may be learned that in a data transmission process, the data is encrypted based on at least the DTLS protocol and the PDCP, that is, repeated encryption occurs.

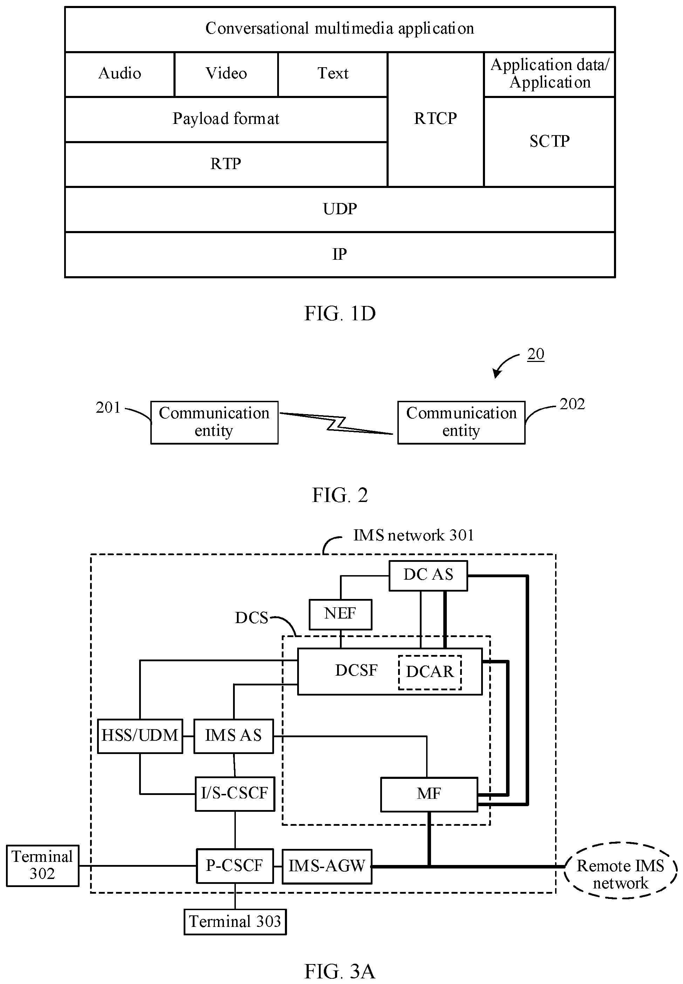

In some scenarios, to avoid repeated encryption, the DTLS protocol in the protocol stack for the data channel may be omitted. Therefore, this application provides a protocol stack of an IMS session. The protocol stack is mainly an extension of a protocol stack for a data channel, and may be specifically shown in FIG. 1D. In FIG. 1D, a protocol stack for an audio channel or a video channel is the same as the protocol stack for the audio channel and the video channel in FIG. 1C. For a data channel, a bottom layer is an IP, a UDP is over the IP, an SCTP is over the UDP, the data channel is over the SCTP, and a conversational multimedia application is over the data channel. In comparison with FIG. 1C, the DTLS protocol is omitted in the protocol stack for the data channel shown in FIG. 1D. In other words, the data channel in this application may support two protocol stacks. Therefore, the data channel in this application is applicable to more communication scenarios, for example, a scenario in which encryption based on the DTLS protocol is needed and a scenario in which encryption based on the DTLS protocol is not needed, so that communication flexibility can be improved.

Optionally, for the protocol stack for the data channel shown in FIG. 1D, in addition to the SCTP and the UDP, a NAT traversal technology may also be used for the data channel, to cause two communication parties to perceive an IP address and a port of each other. For example, ICE may be integrated with two mechanisms: STUN and TURN, to cause the two communication parties to perceive the IP address and the port of each other.

It should be understood that, in specific application, there are a plurality of technologies for implementing NAT traversal, and the ICE is only one of the technologies. Therefore, the ICE may also be replaced with another NAT traversal technology. This is not limited. In addition, the SCTP or the UDP is only a protocol applicable to the data channel and may also be replaced with another protocol. For example, the SCTP may be replaced with a QUIC.

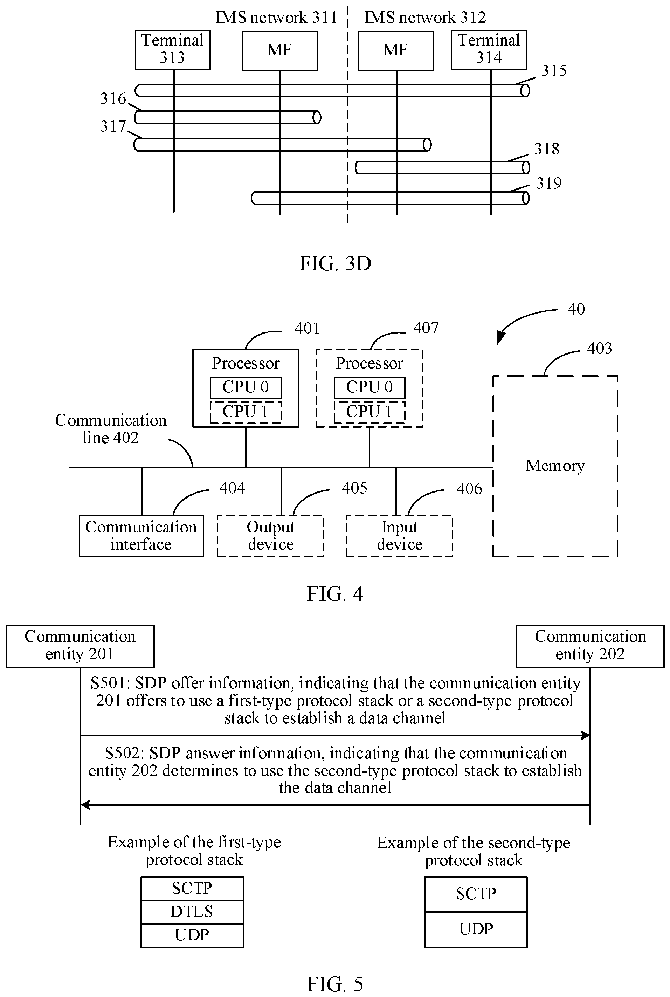

In conclusion, in this application, the data channel supports at least two types of protocol stacks. For example, one type of protocol stack includes the DTLS protocol (corresponding to a first-type protocol stack in the following embodiments), and the other type of protocol stack does not include the DTLS protocol (corresponding to a second-type protocol stack in the following embodiments). To make an SDP offerer and an SDP answerer determine a finally used protocol stack for a data channel, this application provides a communication method. In the communication method, the SDP offerer and the SDP answerer may negotiate whether a protocol stack for a data channel of an IMS session that the SDP offerer and the SDP answerer participate in includes a DTLS protocol. Therefore, in the method, a protocol stack for a data channel may be determined for communication scenarios having different security requirements, to improve communication flexibility. In addition, if a result of negotiation between the SDP offerer and the SDP answerer is that the protocol stack for the data channel does not include the DTLS protocol, in the method, a quantity of encryption times may also be reduced, to improve transmission efficiency. The method is specifically described in the following methods shown in FIG. 5 to FIG. 8A to FIG. 8C. Details are not described herein.

It may be understood that the method provided in this application may be applied to various communication systems. For example, the communication system may be a long term evolution (long term evolution, LTE) system, a 5th generation (5th generation, 5G) communication system, a wireless fidelity (wireless fidelity, Wi-Fi) system, a 3GPP-related communication system, a future evolved communication system (for example, a 6th generation (6th generation, 6G) communication system), or a system integrating a plurality of systems. This is not limited. 5G may also be referred to as new radio (new radio, NR). The method provided in this application is described below by using a communication system 20 shown in FIG. 2 as an example. FIG. 2 is merely a diagram, and does not constitute a limitation on an application scenario of the technical solutions provided in this application.

FIG. 2 is a diagram of an architecture of a communication system 20 according to this application. In FIG. 2, the communication system 20 may include at least two communication entities, for example, a communication entity 201 and a communication entity 202. The communication entity 201 may communicate with the communication entity 202 over an IMS network.

For example, the communication entity 201 and the communication entity 202 are an SDP offerer and an SDP answerer respectively, and may negotiate whether a protocol stack for a data channel of an IMS session that the communication entity 201 and the communication entity 202 participate in includes a DTLS protocol. The IMS session that the communication entity 201 and the communication entity 202 participate in may be understood as that the communication entity 201 and the communication entity 202 may communicate with each other through the IMS session. For example, the IMS session is a session between the communication entity 201 and the communication entity 202, or a session between the communication entity 201 and the communication entity 202 is a session in the IMS session.

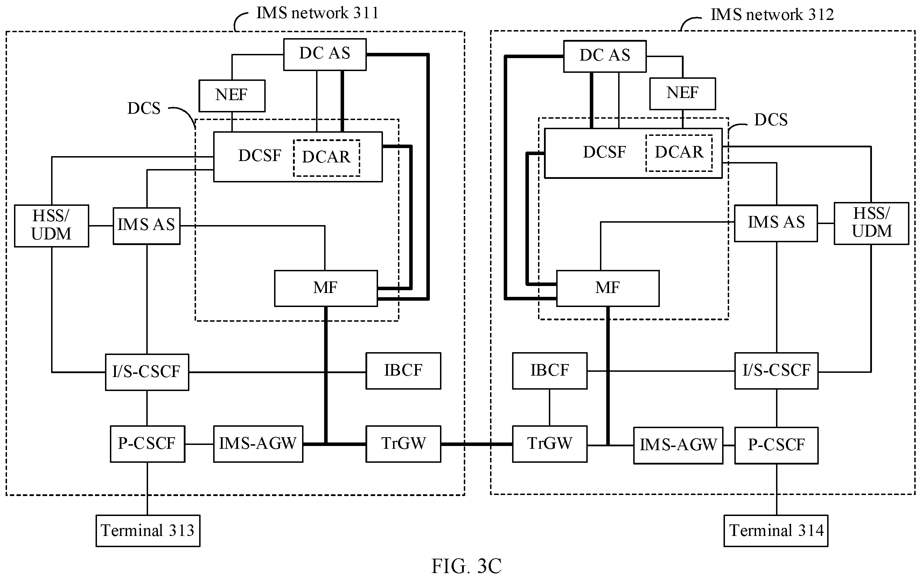

It may be understood that the communication entity 201 and the communication entity 202 may be in a same IMS network or different IMS networks. Descriptions are provided below by using the examples in FIG. 3A and FIG. 3C.

FIG. 3A and FIG. 3C are schematic diagrams of communication scenarios according to this application. FIG. 3A shows a communication scenario in which a calling terminal and a called terminal are in a same IMS network. FIG. 3C shows a communication scenario in which a calling terminal and a called terminal are in different IMS networks. The following provides detailed descriptions.

In FIG. 3A, a terminal 302 and a terminal 303 may communicate with each other over an IMS network 301. The IMS network 301 is a call originating network and a call terminating network. The terminal 302 is a calling terminal, and the terminal 303 is a called terminal. Alternatively, the terminal 302 is a called terminal, and the terminal 303 is a calling terminal. The IMS network 301 includes a DC AS, a network exposure function (network exposure function, NEF) entity and a DCS communicatively connected to the DC AS, a home subscriber server (home subscriber server, HSS)/unified data management (unified data management, UDM) entity and an IMS AS communicatively connected to the DCS, a CSCF entity communicatively connected to the IMS AS and the HSS/UDM entity, and an IMS access media gateway (access media gateway, IMS-AGW) communicatively connected to the CSCF entity.

The DCS may include a data channel signaling function (data channel signaling function, DCSF) entity and an MF entity. Optionally, the DCS further includes a data channel application repository (data channel application repository, DCAR) entity. FIG. 3A shows that the DCSF and the DCAR are deployed on a same entity, and the MF is separately deployed on an entity. In specific application, a deployment manner of the DCSF, the DCAR, and the MF is not limited. For example, the DCSF, the DCAR, and the MF may be separately deployed on different entities, or at least two of the DCSF, the DCAR, and the MF are deployed on a same entity.

The CSCF entity is a function entity in the IMS, and is a core of the entire IMS. The CSCF entity is mainly responsible for processing signaling control in a multimedia call session process. The CSCF entity manages user authentication of the IMS and quality of service (quality of service, QoS) on an IMS bearer plane, and cooperates with another network element to perform SIP session control, service negotiation, resource allocation, and the like. According to different functions, the CSCF entity may be divided into a proxy CSCF (P-CSCF) entity, an interrogating CSCF (interrogating CSCF, I-CSCF) entity, a serving CSCF (S-CSCF) entity, and the like. FIG. 3A shows that the I-CSCF and the S-CSCF are deployed on a same entity, and the P-CSCF is separately deployed on an entity. In specific application, a deployment manner of the I-CSCF, the S-CSCF, and the P-CSCF is not limited. For example, the I-CSCF, the S-CSCF, and the P-CSCF may be separately deployed on different entities, or at least two of the I-CSCF, the S-CSCF, and the P-CSCF are deployed on the same entity.

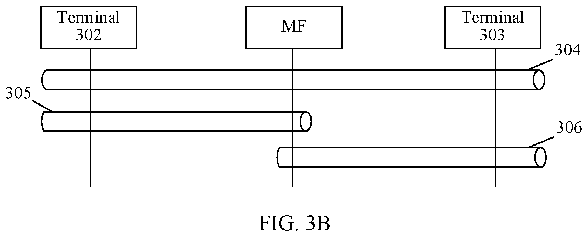

It may be understood that the communication system 20 may be used in the communication scenario shown in FIG. 3A. For example, the communication entity 201 is the terminal 302, the communication entity 202 is the terminal 303, and the terminal 302 and the terminal 303 may negotiate whether a protocol stack for a data channel of an IMS session that the terminal 302 and the terminal 303 participate in includes the DTLS protocol, where the data channel is, for example, a data channel 304 between the terminal 302 and the terminal 303 shown in FIG. 3B. Alternatively, the communication entity 201 is the terminal 302, the communication entity 202 is the IMS AS (or the DCSF entity), and the terminal 302 and the IMS AS (or a DCSF entity) may negotiate whether a protocol stack for a data channel of an IMS session that the terminal 302 and the IMS AS (or the DCSF entity) participate in includes the DTLS protocol, where the data channel is, for example, a data channel 305 between the terminal 302 and the MF shown in FIG. 3B. Alternatively, the communication entity 201 is the terminal 303, the communication entity 202 is the IMS AS (or the DCSF entity), and the terminal 303 and the IMS AS (or the DCSF entity) may negotiate whether a protocol stack for a data channel of an IMS session that the terminal 303 and the IMS AS (or the DCSF entity) participate in includes the DTLS protocol, where the data channel is, for example, a data channel 306 between the terminal 303 and the MF shown in FIG. 3B.

In FIG. 3C, a terminal 313 and a terminal 314 may communicate with each other over an IMS network 311 and an IMS network 312. One of the IMS network 311 and the IMS network 312 is a call originating network, and the other is a call terminating network. For example, if the terminal 313 is a calling terminal, and the terminal 314 is a called terminal, the IMS network 311 is a call originating network, and the IMS network 312 is a call terminating network. If the terminal 313 is a called terminal, and the terminal 314 is a calling terminal, the IMS network 311 is a call terminating network, and the IMS network 312 is a call originating network. The IMS network 311 and the IMS network 312 include similar entities. For example, the IMS network 311 or the IMS network 312 includes a DC AS, an NEF entity and a DCS communicatively connected to the DC AS, an HSS/UDM entity and an IMS AS communicatively connected to the DCS, a CSCF entity communicatively connected to the IMS AS, an IMS-AGW and an interconnection border control function (interconnection border control function, IBCF) entity communicatively connected to the CSCF entity, and a transition gateway (transition gateway, TrGW) communicatively connected to the IMS-AGW. For descriptions of the DCS and the CSCF entity, refer to the corresponding descriptions in FIG. 3A.

It may be understood that the communication system 20 may be used in the communication scenario shown in FIG. 3C. For example, the communication entity 201 is the terminal 313, the communication entity 202 is the terminal 314, and the terminal 313 and the terminal 314 may negotiate whether a protocol stack for a data channel of an IMS session that the terminal 313 and the terminal 314 participate in includes the DTLS protocol, where the data channel is, for example, a data channel 315 between the terminal 313 and the terminal 314 shown in FIG. 3D. Alternatively, the communication entity 201 is the terminal 313, the communication entity 202 is the IMS AS (or the DCSF entity) in the IMS network 311, and the terminal 313 and the IMS AS (or the DCSF entity) may negotiate whether a protocol stack for a data channel of an IMS session that the terminal 313 and the IMS AS (or the DCSF entity) participate in includes the DTLS protocol, where the data channel is, for example, a data channel 316 between the terminal 313 and the MF in the IMS network 311 shown in FIG. 3D. Alternatively, the communication entity 201 is the terminal 313, the communication entity 202 is the IMS AS (or the DCSF entity) in the IMS network 312, and the terminal 313 and the IMS AS (or the DCSF entity) may negotiate whether a protocol stack for a data channel of an IMS session that the terminal 313 and the IMS AS (or the DCSF entity) participate in includes the DTLS protocol, where the data channel is, for example, a data channel 317 between the terminal 313 and the MF in the IMS network 312 shown in FIG. 3D. Alternatively, the communication entity 201 is the terminal 314, the communication entity 202 is the IMS AS (or the DCSF entity) in the IMS network 312, and the terminal 314 and the IMS AS (or the DCSF entity) may negotiate whether a protocol stack for a data channel of an IMS session that the terminal 314 and the IMS AS (or the DCSF entity) participate in includes the DTLS protocol, where the data channel is, for example, a data channel 318 between the terminal 314 and the MF in the IMS network 312 shown in FIG. 3D. Alternatively, the communication entity 201 is the terminal 314, the communication entity 202 is the IMS AS (or the DCSF entity) in the IMS network 311, and the terminal 314 and the IMS AS (or the DCSF entity) may negotiate whether a protocol stack for a data channel of an IMS session that the terminal 314 and the IMS AS (or the DCSF entity) participate in includes the DTLS protocol, where the data channel is, for example, a data channel 319 between the terminal 314 and the MF in the IMS network 311 shown in FIG. 3D.

To better understand a communication scenario provided in this application, the following specifically describes functions of various entities in FIG. 3A and FIG. 3C.

The DC AS may be configured to provide data channel service logic. In FIG. 3A or FIG. 3C, the DC AS is deployed in the IMS network, and may be directly connected to another entity in the IMS network through an interface (for example, a service-oriented interface). In specific application, the DC AS may not be deployed in the IMS network, but is deployed outside the IMS network, and is connected to another network element in the IMS network by using an NEF entity (or IMS border network management).

The NEF entity may be configured to securely open various services of a core network (for example, a 5G core network) to a third party.

The DCSF entity may provide a data channel signaling control function.

The DCAR may be used to store data channel applications. For example, after a developer develops a data channel application, the developer uploads the application to a DCS of an operator, and the DCS saves the application to the DCAR. When necessary, the DCS downloads the data channel application from the DCAR to the DCS for subsequent processing.

The HSS/UMD entity may be responsible for storing IMS user subscription data. Specifically, for a 4G network, the IMS network includes an HSS, and the HSS may be responsible for storing IMS user subscription data in the 4G network. For a 5G network, the IMS network includes a UMD entity, and the UMD entity may be responsible for storing IMS user subscription data in the 5G network.

The IMS AS is an application layer device at a top layer of the IMS network. The IMS AS provides basic and supplementary services and services such as a multimedia conference, convergent communication, a short message service gateway, and a standard attendant console. The IMS AS may interact with the CSCF entity to trigger and execute various network services. The IMS AS may negotiate the data channel with the terminal. For example, the IMS AS may be a multimedia telephony application server (multimedia telephony application server, MMTEL AS) or a telephony application server (telephony application server, TAS).

The MF entity may be configured to provide a data channel media resource management function.

The S-CSCF entity may be responsible for registration, authentication, session, routing, service triggering, and the like of an IMS user.

The I-CSCF entity is a unified entry point of a home network of an IMS user, and may be responsible for allocating or querying for an S-CSCF that serves the user.

The P-CSCF entity is an ingress node for a user to access the IMS network, and may be responsible for forwarding SIP signaling between an IMS user and a home network.

The IMS-AGW may provide functions of an access gateway and a media gateway on the IMS network.

The IBCF entity may implement signaling interworking, topology hiding, and IP security protection for voice, video, and multimedia services.

The TrGW entity may implement media interworking, topology hiding, and IP security protection for voice, video, and multimedia services. In addition, the TrGW entity further supports voice codec conversion and other functions.

It should be understood that FIG. 3A or FIG. 3C shows merely an example of a communication scenario to which the method provided in this application may be applied. In specific application, the communication scenario to which the method provided in this application may be applied may alternatively be in another form. For example, more or fewer entities than those in FIG. 3A or FIG. 3C may be included. This is not limited.

It may be understood that the communication system 20 shown in FIG. 2 is merely used as an example, and is not intended to limit the technical solutions of this application. A person skilled in the art should understand that, in a specific implementation process, the communication system 20 may further include another device, and a quantity of communication entities may be determined based on a specific requirement. This is not limited.

Optionally, the communication entities in FIG. 2 in this application may also be referred to as communication apparatuses, and may be general-purpose devices or dedicated devices. This is not specifically limited in this application.

Optionally, related functions of the communication entities in FIG. 2 in this application may be implemented by one device, may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or an instantiated virtualized function on a platform (for example, a cloud platform).

During specific implementation, the communication entities shown in FIG. 2 may use a composition structure shown in FIG. 4, or include components shown in FIG. 4. FIG. 4 is a diagram of a hardware structure of a communication apparatus to which this application is applicable. The communication apparatus 40 includes at least one processor 401 and at least one communication interface 404, to implement the method provided in this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path, such as a bus, for transferring information between the components described above.

The communication interface 404 is configured to communicate with another device or a communication network. The communication interface 404 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, a transceiver circuit, or the like.

The memory 403 may be a read-only memory (read-only memory, ROM), or another type of static storage device that can store static information and instructions, or a random access memory (random access memory, RAM), or another type of dynamic storage device that can store information and instructions. Alternatively, the memory may be an electrically erasable programmable read-only memory (electrically erasable programmable read-only memory, EEPROM), or a compact disc read-only memory (compact disc read-only memory, CD-ROM), or another compact disc storage, an optical disc storage (including a compact disc, a laser disc, an optical disc, a digital versatile disc, a Blu-ray disc, or the like), or a magnetic disk storage medium or another magnetic storage device, or any other medium that can be used to carry or store expected program code in a form of an instruction or a data structure and that is accessible by a computer. This is not limited thereto. The memory may exist independently, and is coupled to the processor 401 through the communication line 402. Alternatively, the memory 403 may be integrated with the processor 401. Usually, the memory provided in this application may be non-volatile.

The memory 403 is configured to store computer-executable instructions for performing the solutions provided in this application, and the processor 401 controls execution of the computer-executable instructions. The processor 401 is configured to execute the computer-executable instructions stored in the memory 403, to implement the method provided in this application. Alternatively, optionally, in this application, the processor 401 may perform a processing-related function in a method provided below in this application, and the communication interface 404 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is for information exchange between the apparatuses, the units, or the modules.

In an embodiment, the processor 401 may include one or more CPUs, for example, a CPU 0 and a CPU 1 in FIG. 4.

In an embodiment, the communication apparatus 40 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 is coupled to the processor 401, and may receive a user input in a plurality of manners. For example, the input device 406 may be a mouse, a keyboard, a touchscreen device, or a sensor device.

It may be understood that the composition structure shown in FIG. 4 does not constitute a limitation on the communication apparatus. In addition to the components shown in FIG. 4, the communication apparatus may include more or fewer components than those shown in the figure, or combine some components, or have different component arrangements.

The following describes the method provided in this application with reference to the accompanying drawings. Network elements in the following embodiments may have components shown in FIG. 4. Details are not described again.

It may be understood that, in this application, "transmit" may be understood as send and/or receive based on a specific context. The "transmit" may be a noun or a verb. When an execution entity of an action is not emphasized, the "transmit" is often used to substitute send and/or receive. For example, the phrase "transmitting data" may be understood as "sending the data" from a perspective of a transmit end, and may be understood as "receiving the data" from a perspective of a receive end.

It may be understood that the "connection" in this application may be a direct connection or an indirect connection. In addition, the "connection" may be an electrical connection or a communication connection. For example, that two electrical elements A and B are connected may mean that A and B are directly connected, or may mean that A and B are indirectly connected by using another electrical element or a connection medium, so that electrical signal transmission can be performed between A and B. For another example, that two devices A and B are connected may mean that A and B are directly connected, or may mean that A and B are indirectly connected by using another communication device or a communication medium, so that A and B can communicate with each other.

It may be understood that names of messages between communication entities, names of parameters in messages, or the like in the following embodiments of this application are merely examples, and there may alternatively be other names during specific implementation. This is not specifically limited in this application.

It may be understood that "sending information to ... (for example, a communication entity)" in this application may be understood as that a destination end of the information is the communication entity, and may include directly or indirectly sending the information to the communication entity. "Receiving information from ... (for example, a communication entity)" may be understood as that a source end of the information is a communication entity, and may include directly or indirectly receiving the information from the communication entity. Information may undergo necessary processing, for example, a format change, between the source for sending the information and the destination. However, the destination may understand valid information from the source. Similar descriptions in this application may be understood similarly, and details are not described herein again.

It may be understood that, in this application, "/" may indicate an "or" relationship between associated objects. For example, A/B may indicate A or B. "And/or" may indicate that there are three relationships between the associated objects. For example, A and/or B may indicate the following three cases: Only A exists, both A and B exist, and only B exists, where A and B may be in a singular form or a plural form. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with a same function or similar functions. The terms such as "first" and "second" do not limit a quantity and an execution sequence, and the terms such as "first" and "second" do not limit a definite difference. In this application, the term "in an example", "for example", or the like indicates an example, an illustration, or a description. Any embodiment or design scheme described with "in an example" or "for example" should not be construed as being more preferred or advantageous than another embodiment or design scheme. Use of the term such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not be construed as any limitation on implementation processes of this application.

It may be understood that, in this application, "when", "in a case in which", "if", and "it is assumed that" all mean that corresponding processing is performed in an objective case, are not intended to limit time, do not require to necessarily have a determining action during implementation, and do not mean that there is another limitation.

"Simultaneously" in this application may be understood as being at a same time point, may be understood as being within a time period, or may be understood as being within a same periodicity.

In this application, "a plurality of" may be understood as two or more, unless otherwise specified. For example, a plurality of terminals may be understood as two or more terminals.

It may be understood that, in some scenarios, some optional features in this application may be independently implemented without relying on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in this application may also correspondingly implement these features or functions. Details are not described herein.

It may be understood that, in this application, a same step, or steps or technical features that have a same function may be mutually referenced in different embodiments.

The following describes the communication method provided in this application by using an example in which the communication entity 201 shown in FIG. 2 is an SDP offerer, and the communication entity 202 is an SDP answerer.

It may be understood that, in this application, the communication entity 201 and/or the communication entity 202 may perform some or all of the steps in this application. These steps are merely examples. In this application, other steps or variations of various steps may be further performed. In addition, the steps may be performed in a sequence different from a sequence shown in this application, and not all of the steps in this application are necessarily performed.

It may be understood that, in the method provided below in this application, the method is illustrated by using an example in which the communication entity 201 and the communication entity 202 are used as execution entities of interaction illustration. However, the execution entities of the interaction illustration are not limited in this application. For example, a communication entity (for example, the communication entity 201 or the communication entity 202) in a method provided in the following embodiments of this application may be a chip, a chip system, or a processor that supports the communication entity in implementing the method, or may be a logical node, a logical module, or software that can implement all or some functions of the communication entity.

FIG. 5 shows a communication method according to this application. The communication method may include the following steps.

S501: A communication entity 201 sends SDP offer (SDP offer) information to a communication entity 202. Correspondingly, the communication entity 202 receives the SDP offer information from the communication entity 201.

In this application, the SDP offer information may indicate that the communication entity 201 offers (offers) to use a first-type protocol stack or a second-type protocol stack to establish (or negotiate) a data channel.

The data channel is associated with an IMS session between the communication entity 201 and the communication entity 202, and may be for transmitting application data or an application between the communication entity 201 and the communication entity 202. Optionally, the data channel is a BDC or an ADC. It may be understood that the IMS session is an IMS session that the communication entity 201 and the communication entity 202 participate in. For specific descriptions of the data channel, the BDC, and the ADC, refer to the foregoing descriptions of the data channel. For specific descriptions of the IMS session, refer to the foregoing descriptions of the IMS session.

It should be understood that, based on different roles of the communication entity 201 and the communication entity 202, the data channel may be one of the foregoing data channel 304 to the foregoing data channel 306, or one of the foregoing data channel 315 to the foregoing data channel 319. For details, refer to corresponding descriptions in FIG. 3B or FIG. 3D. Details are not described herein again.

It may be understood that, for that the communication entity 201 offers to use the first-type protocol stack or the second-type protocol stack to establish the data channel is indicated in the SDP offer information, a quantity of data channels and/or a type of the data channel is not limited in this application. For example, the SDP offer information indicates that the communication entity 201 offers to use the first-type protocol stack or the second-type protocol stack to establish a data channel 1. The data channel 1 is an ADC or a BDC. For another example, the SDP offer information indicates that the communication entity 201 offers to use the first-type protocol stack or the second-type protocol stack to establish a data channel 1 and a data channel 2. The data channel 1 is an ADC, and the data channel 2 is a BDC; both the data channel 1 and the data channel 2 are ADCs; or both the data channel 1 and the data channel 2 are BDCs.

In a possible design, the first-type protocol stack includes a DTLS protocol, and the second-type protocol stack does not include the DTLS protocol.

For example, the first-type protocol stack is a protocol stack of an SCTP over a DTLS protocol over a UDP, which may be denoted as a UDP/DTLS/SCTP protocol stack, an SCTP/DTLS/UDP protocol stack, an SCTP over DTLS over UDP protocol stack, or an SCTP over DTLS protocol stack encapsulated based on the UDP. The second-type protocol stack is a protocol stack of the SCTP over the UDP, which may be denoted as a UDP/SCTP protocol stack, an SCTP/UDP protocol stack, an SCTP over UDP protocol stack, or an SCTP protocol stack encapsulated based on the UDP.

In a possible design, the SDP offer information includes first indication information, and the first indication information indicates that the first-type protocol stack or the second-type protocol stack is used to establish the data channel. For example, the SDP offer information includes a first SDP media description (media description) corresponding to the foregoing data channel, and the first SDP media description includes one m line. The m line may indicate information related to the data channel established by the communication entity 201. For example, the m line includes the first indication information.

For example, if the first indication information indicates that the first-type protocol stack is used to establish the data channel, the first indication information is "UDP/DTLS/SCTP" or "SCTP/DTLS/UDP"; or if the first indication information indicates that the second-type protocol stack is used to establish the data channel, the first indication information is "UDP/SCTP" or "SCTP/UDP". It may be understood that, for ease of description, in this application, an example in which the first indication information is "UDP/DTLS/SCTP" or "UDP/SCTP" is used for description. In addition, in addition to the foregoing first SDP media description, the SDP offer information may further include another SDP media description corresponding to one or more data channels. This is not limited.

Optionally, the first SDP media description further includes a c line, a b line, and an a line that are related to the data channel, which are respectively used to carry at least one of an IP address, an IP port, an SCTP port, a stream ID, information related to the DTLS protocol, or media information of the data channel.

The following describes content included in the SDP offer information.

In an example, if the SDP offer information indicates that the communication entity 201 offers to use the first-type protocol stack to establish the data channel, the content included in the SDP offer information may be shown in Table 2-1. In Table 2-1, the first SDP media description includes content from "m=application 52718 UDP/DTLS/SCTP webrtc-datachannel" to "a=dcmap:0 subprotocol="http"". The m line includes "m=application 52718 UDP/DTLS/SCTP webrtc-datachannel", and in the m line, the first indication information is "UDP/DTLS/SCTP". In addition, the c line (that is, c=IN IP4 192.0.2.1) indicates that the IP address of the data channel is "192.0.2.1", the a line indicates that the IP port of the data channel is 52718 (for example, a=candidate:1 1 UDP 2130706431 192.0.2.1 52718 typ host), the SCTP port of the data channel is "5002" (for example, a=sctp-port:5002), and the stream ID of the data channel is "0" (for example, a=dcmap:0 subprotocol="http"). The information related to the DTLS protocol includes "a=fingerprint:SHA-1 4A:AD:B9:B1:3F:82:18:3B:54:02:12:DF:3E:5D:49:6B:19:E5:7C:AB" and "a=tls-id: abc3de65cddef001be82", where an attribute line "a=fingerprint" may indicate a certificate fingerprint of the DTLS protocol, and an attribute line "a=tls-id" may indicate a connection identifier of the DTLS protocol (or referred to as an identifier of a DTLS association or an identifier of a DTLS connection).

**Table 2-1**

| | |
|---|---|
| | a=ice-lite |
| | ... |
| | m=application 52718 UDP/DTLS/SCTP webrtc-datachannel |
| | c=IN IP4 192.0.2.1 |
| | b=AS:500 |
| | a=candidate:1 1 UDP 2130706431 192.0.2.1 52718 typ host |
| | a=ice-ufrag:9uB6 |
| | a=ice-pwd:YH75Fviy6338Vbrhrlp8Yh |
| | a=max-message-size:1024 |
| | a=sctp-port:5002 |
| | a=setup:active |
| | a=fingerprint: SHA-1 |
| 4A:AD:B9:B1:3F:82:18:3B:54:02:12:DF:3E:5D:49:6B:19:E5:7C:AB | |
| | a=tls-id: abc3de65cddef001be82 |
| | a=dcmap:0 subprotocol="http" |
| | ... |

When the SDP offer information indicates that the communication entity 201 offers to use the first-type protocol stack or the second-type protocol stack to establish two data channels, the content included in the SDP offer information may be shown in Table 2-2 or Table 2-3. Compared with Table 2-1, Table 2-2 has one additional line "a=dcmap:10 subprotocol="http"". Therefore, Table 2-2 indicates that the SDP offer information indicates that the communication entity 201 offers to use the first-type protocol stack to establish two data channels, where a stream ID of one data channel is "0", and a stream ID of the other data channel is "10". It may be understood that values of the stream IDs of the two data channels are both less than 1000. Therefore, the two data channels are both BDCs.

**Table 2-2**

| | |
|---|---|
| | a=ice-lite |
| | ... |
| | m=application 52718 **UDP/DTLS/SCTP** webrtc-datachannel |
| | c=IN IP4 192.0.2.1 |
| | b=AS:500 |
| | a=candidate:1 1 UDP 2130706431 192.0.2.1 52718 typ host |
| | a=ice-ufrag:9uB6 |
| | a=ice-pwd:YH75Fviy6338Vbrhrlp8Yh |
| | a=max-message-size:1024 |
| | a=sctp-port:5002 |
| | a=setup:active |
| | a=fingerprint: SHA-1 |
| 4A:AD:B9:B1:3F:82:18:3B:54:02:12:DF:3E:5D:49:6B:19:E5:7C:AB | |
| | a=tls-id: abc3de65cddef1701be82 |
| | **a=dcmap:0 subprotocol="http"** |
| | **a=dcmap:10 subprotocol="http"** |
| | ... |

Compared with Table 2-1, Table 2-3 has one additional line "a=dcmap:1100 subprotocol="http"". Therefore, Table 2-3 indicates that the SDP offer information indicates that the communication entity 201 offers to use the first-type protocol stack to establish two data channels, where a stream ID of one data channel is "0", and a stream ID of the other data channel is "1100". It may be understood that a value of the stream ID of the one data channel is less than 1000, and therefore the data channel is a BDC; and a value of the stream ID of the other data channel is greater than 1000, and therefore the data channel is an ADC.

**Table 2-3**

| | |
|---|---|
| | a=ice-lite |
| | ... |
| | m=application 52718 **UDP/DTLS/SCTP** webrtc-datachannel |
| | c=IN IP4 192.0.2.1 |
| | b=AS:500 |
| | a=candidate:1 1 UDP 2130706431 192.0.2.1 52718 typ host |
| | a=ice-ufrag:9uB6 |
| | a=ice-pwd:YH75Fviy6338Vbrhrlp8Yh |
| | a=max-message-size:1024 |
| | a=sctp-port:5002 |
| | a=setup:active |
| | a=fingerprint: SHA-1 |
| 4A:AD:B9:B1:3F:82:18:3B:54:02:12:DF:3E:5D:49:6B:19:E5:7C:AB | |
| | a=tls-id: abc3de65cddef001be82 |
| | **a=dcmap:0 subprotocol="http"** |
| | **a=dcmap:1100 subprotocol="http"** |
| | ... |

In another example, if the SDP offer information indicates that the communication entity 201 offers to use the second-type protocol stack to establish the data channel, the content included in the SDP offer information may be shown in Table 3. In Table 3, the first SDP media description includes content from "m=application 52718 UDP/SCTP webrtc-datachannel" to "a=dcmap:0 subprotocol="http"". The m line includes "m=application 52718 UDP/SCTP webrtc-datachannel", and in the m line, the first indication information is "UDP/SCTP". In addition, the c line indicates that the IP address of the data channel is 192.0.2.1, the a line indicates that the IP port of the data channel is 52718, the SCTP port of the data channel is "5002", and the stream ID of the data channel is "0". Because the second-type protocol stack does not include the DTLS protocol, the first SDP media description does not include the information related to the DTLS protocol.

**Table 3**

| | |
|---|---|
| | a=ice-lite |
| | ... |
| | m=application 52718 **UDP/SCTP** webrtc-datachannel |
| | c=IN IP4 192.0.2.1 |
| | b=AS:500 |
| | a=candidate:1 1 UDP 2130706431 192.0.2.1 52718 typ host |
| | a=ice-ufrag:9uB6 |
| | a=ice-pwd:YH75Fviy6338Vbrhrlp8Yh |
| | a=max-message-size:1024 |
| | a=sctp-port:5002 |
| | a=setup:active |
| | a=dcmap:0 subprotocol="http" |
| | ... |

It may be understood that the content shown in Table 2 and Table 3 is examples of the SDP offer information. In specific application, the SDP offer information may include more or less information than that of the content shown in Table 2 or Table 3. This is not limited.

In a possible design, the SDP offer information is carried in an invite request (INVITE), an update request (UPDATE), or a re-invite request (re-INVITE).

S502: The communication entity 202 sends SDP answer (SDP answer) information to the communication entity 201 based on the SDP offer information. Correspondingly, the communication entity 201 receives the SDP answer information from the communication entity 202.

In this application, the SDP answer information indicates that the communication entity 202 determines to use the second-type protocol stack to establish the data channel.

In a possible design, the SDP answer information includes second indication information, and the second indication information indicates that it is determined that the second-type protocol stack is used to establish the data channel. For example, the SDP answer information includes an SDP media description corresponding to data channels whose quantity is the same as that in the SDP offer information and whose sequence is consistent with that in the SDP offer information, for example, includes a second SDP media description corresponding to the foregoing data channel, where the second SDP media description is an SDP media description associated with the foregoing first SDP media description. The second SDP media description includes one m line, where the m line may indicate information related to the data channel established by the communication entity 202. For example, the m line includes the second indication information, and the second indication information is "UDP/SCTP" or "SCTP/UDP". It may be understood that, for ease of description, in this application, an example in which the second indication information is "UDP/SCTP" is used for description.

Optionally, the second SDP media description further includes a c line, a b line, and an a line that are related to the data channel, which are respectively used to carry at least one of an IP address, an IP port, an SCTP port, and a stream ID of the data channel, or media information of the data channel.

The following describes content included in the SDP answer information.

In an example, the content included in the SDP answer information may be shown in Table 4. In Table 4, the second SDP media description includes content from "m=application 1224 UDP/SCTP webrtc-datachannel" to "a=dcmap:0 subprotocol="http"". The m line includes "m=application 1224 UDP/SCTP webrtc-datachannel", and in the m line, the second indication information is "UDP/SCTP". In addition, the c line indicates that the IP address of the data channel is 192.0.2.10, the a line indicates that the IP port of the data channel is 1224, the SCTP port of the data channel is "5001", and the stream ID of the data channel is "0". Because the second-type protocol stack does not include the DTLS protocol, the second SDP media description may not include information related to the DTLS protocol.

**Table 4**

| | |
|---|---|
| | a=ice-lite |
| | ... |
| | m=application 1224 **UDP/SCTP** webrtc-datachannel |
| | c=IN IP4 192.0.2.10 |
| | b=AS:500 |
| | a=candidate:1 1 UDP 2130706431 192.0.2.10 1224 typ host |
| | a=ice-ufrag:9uB6 |
| | a=ice-pwd:YH75Fviy6338Vbrhrlae9f |
| | a=max-message-size: 1024 |
| | a=sctp-port:5001 |
| | a=setup:passive |
| | a=dcmap:0 subprotocol="http" |
| | ... |

The foregoing shows a case in which the SDP answer information indicates that the communication entity 202 determines to use the second-type protocol stack to establish the data channel. In addition, in specific application, the SDP answer information may alternatively indicate that the communication entity 202 determines to use the first-type protocol stack to establish the data channel. In this case, the second indication information is "UDP/DTLS/SCTP". Optionally, the second SDP media description further includes information related to the DTLS protocol.

In an example, the content included in the SDP answer information may be shown in Table 5. In Table 5, the second SDP media description includes content from "m=application 1224 UDP/SCTP webrtc-datachannel" to "a=dcmap:0 subprotocol="http"". The m line includes "m=application 1224 UDP/DTLS/SCTP webrtc-datachannel", and in the m line, the second indication information is "UDP/DTLS/SCTP". In addition, the c line indicates that the IP address of the data channel is 192.0.2.10, the a line indicates that the IP port of the data channel is 1224, the SCTP port of the data channel is "5001", and the stream ID of the data channel is "0". The information related to the DTLS protocol includes "a=fingerprint:SHA-1 4A:AD:B9:B 1 :3F:82: 18:3B:54:02: 12:DF:3E:5D:49:6B: 19:E5:7C:AB" and "a=tls-id: abc3de65cddef001be82", where the former may indicate a certificate fingerprint of the DTLS protocol, and the latter may indicate a connection identifier of the DTLS protocol.

**Table 5**

| | |
|---|---|
| | a=ice-lite |
| | ... |
| | m=application 1224 **UDP/DTLS/SCTP** webrtc-datachannel |
| | c=IN IP4 192.0.2.10 |
| | b=AS:500 |
| | a=candidate:1 1 UDP 2130706431 192.0.2.10 1224 typ host |
| | a=ice-ufrag:9uB6 |
| | a=ice-pwd:YH75Fviy6338Vbrhrlae9f |
| | a=max-message-size:1024 |
| | a=sctp-port:5001 |
| | a=setup:passive |
| | a=fingerprint: SHA-1 |
| 4A:AD:B9:B1:3F:82:18:3B:54:02:12:DF:3E:5D:49:6B:19:E5:78:BC | |
| | a=tls-id: abc12e35adbef001fe46 |
| | a=dcmap:0 subprotocol="http" |
| | ... |

It may be understood that content shown in Table 4 and Table 5 is examples of the SDP answer information. In specific application, the SDP answer information may include more or less information than that of the content shown in Table 4 or Table 5. This is not limited.

In conclusion, the communication entity 201 may offer, in the SDP offer information sent to the communication entity 202, a used protocol stack for the data channel. After receiving the SDP offer information, the communication entity 202 may determine a finally used protocol stack for the data channel (that is, the communication entity 202 may determine the protocol stack for the data channel), and indicate, in the SDP answer information sent to the communication entity 201, the finally used protocol stack for the data channel. Then, the communication entity 201 and the communication entity 202 may establish the data channel based on the determined protocol stack, and then communicate with each other. For example, if the finally used protocol stack for the data channel is the first-type protocol stack, the communication entity 201 and the communication entity 202 use the SCTP over DTLS over the UDP as a data bearer protocol; or if the finally used protocol stack for the data channel is the second-type protocol stack, the communication entity 201 and the communication entity 202 use the SCTP over the UDP as a data bearer protocol.

In an example, the communication entity 202 may determine, according to a policy shown in Table 6, the finally used protocol stack for the data channel. For example, if the communication entity 201 offers to use the first-type protocol stack to establish the data channel, the communication entity 202 may determine to use the first-type protocol stack to establish the data channel, or determine to use the second-type protocol stack to establish the data channel; or if the communication entity 201 offers to use the second-type protocol stack to establish the data channel, the communication entity 202 may determine to use the second-type protocol stack to establish the data channel.

**Table 6**

| Protocol stack offered by the communication entity 201 for the data channel | Protocol stack determined by the communication entity 202 for the data channel |
|---|---|
| First-type protocol stack | First-type protocol stack or second-type protocol stack |
| Second-type protocol stack | Second-type protocol stack |

In a possible design, the SDP answer information is carried in a response message whose status code is 180 (for example, a 180 message), a response message whose status code is 183 (for example, a 183 message), or a response message whose status code is 200 (for example, a 200 message).

In the foregoing example, the finally used protocol stack for the data channel is determined by the communication entity 202. In addition to this manner, the finally used protocol stack for the data channel may alternatively be determined by an entity other than the communication entity 201 and the communication entity 202. For example, the communication entity 201 and the communication entity 202 may send, to a communication entity 203, protocol stacks that are for the data channel and that are offered by the communication entity 201 and the communication entity 202, and the communication entity 203 determines the finally used protocol stack for the data channel.

Actions of the communication entity 201 or the communication entity 202 in S501 and S502 may be performed by the processor 401 in the communication apparatus 40 shown in FIG. 4 by invoking the application program code stored in the memory 403. This is not limited in this application.

According to the method shown in FIG. 5, the communication entity 201 and the communication entity 202 may negotiate whether a used protocol stack for a data channel of an IMS session that the communication entity 201 and the communication entity 202 participate in includes the DTLS protocol, so that the data channel is applicable to different communication scenarios. For example, in a scenario in which a requirement on communication security is high or encryption based on the DTLS protocol is needed, the protocol stack for the data channel may include the DTLS protocol; and in a scenario in which a requirement on communication security is not high or encryption based on the DTLS protocol is not needed, the protocol stack for the data channel may not include the DTLS protocol. Therefore, according to the method shown in FIG. 5, communication flexibility can be improved. In addition, if a result of negotiation between the communication entity 201 and the communication entity 202 is that the protocol stack for the data channel does not include the DTLS protocol, data transmitted in the data channel does not need to be processed based on the DTLS protocol. For example, the data does not need to be encrypted based on the DTLS protocol, to reduce a quantity of encryption times. Therefore, according to the method shown in FIG. 5, data transmission efficiency can be further improved, a data transmission delay can be shortened, and performance overheads of the network device can be reduced.

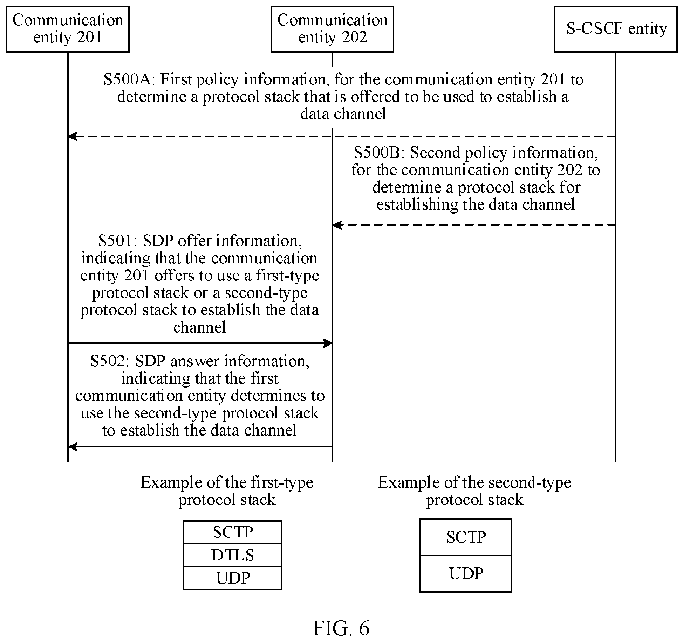

Optionally, in a possible implementation of the method shown in FIG. 5, a network device in a communication network (for example, an IMS network) may indicate, to the communication entity 201 and/or the communication entity 202, a policy of a protocol stack for a data channel to which the communication entity 201 and/or the communication entity 202 are/is applicable. In this way, the communication entity 201 can determine, according to a policy applicable to the communication entity 201, whether to offer the first-type protocol stack or the second-type protocol stack in the SDP offer information. The communication entity 202 can determine, according to a policy applicable to the communication entity 202 and an offer of the communication entity 201, a finally used protocol stack for the data channel. The following describes the foregoing process by using an example in which the network device is an S-CSCF entity. It should be understood that the S-CSCF entity may also be replaced with a CSCF entity or the like. For example, as shown in FIG. 6, the method shown in FIG. 5 further includes the following steps.

S500A: The S-CSCF entity sends first policy information to the communication entity 201. Correspondingly, the communication entity 201 receives the first policy information from the S-CSCF entity.

In the method shown in FIG. 6, the S-CSCF entity is, for example, the S-CSCF entity in FIG. 3A, or the S-CSCF entity in the IMS network 311 or the S-CSCF entity in the IMS network 312 in FIG. 3C.

In this application, the first policy information is for the communication entity 201 to determine a protocol stack that is offered to be used to establish a data channel.

In a possible implementation, an operator configures the first policy information in the S-CSCF entity. After the communication entity 201 initiates a registration procedure to the communication network, the S-CSCF entity determines the first policy information, and sends the first policy information to the communication entity 201.

Optionally, first policy information corresponding to communication entities in a same communication network is the same, and first policy information corresponding to communication entities in different communication networks may be the same or different.

For example, the terminal 302 and the terminal 303 shown in FIG. 3A are used as an example. Both the terminal 302 and the terminal 303 are located in the IMS network 301, and first policy information sent by the S-CSCF entity to the terminal 302 and the terminal 303 is the same. The terminal 313 and the terminal 314 shown in FIG. 3C are used as an example. The terminal 313 is located in the IMS network 311, and the terminal 314 is located in the IMS network 312. First policy information sent by the S-CSCF entity in the IMS network 311 to the terminal 313 may be the same as or may be different from first policy information sent by the S-CSCF entity in the IMS network 312 to the terminal 314.

In a possible design, the first policy information may indicate that the data channel of the IMS session that the communication entity 201 participates in uses the first-type protocol stack or the second-type protocol stack. The data channel of the IMS session that the communication entity 201 participates in includes an ADC and/or a BDC. In other words, the first policy information may indicate, to the communication entity 201, a protocol stack that is for the data channel and that is necessarily used by the communication entity 201 during subsequent negotiation of the data channel. In this way, the communication entity 201 can offer, based on the first policy information, a used protocol stack for the data channel. For example, if the first policy information indicates that the first-type protocol stack is for the data channel of the IMS session that the communication entity 201 participates in, the communication entity 201 indicates in the SDP offer information that the communication entity 201 offers to use the first-type protocol stack to establish the data channel; or if the first policy information indicates that the second-type protocol stack is for the data channel of the IMS session that the communication entity 201 participates in, the communication entity 201 indicates in the SDP offer information that the communication entity 201 offers to use the second-type protocol stack to establish the data channel.

In a possible design, the first policy information is carried in a response message whose status code is 200 (for example, a 200 OK message). It should be understood that, in addition to this manner, the 200 response message may alternatively not carry the first policy information. In this case, the communication entity 201 may consider by default that the first-type protocol stack is for the data channel of the IMS session that the communication entity 201 participates in. Definitely, the communication entity 201 may also consider by default that the second-type protocol stack is for the data channel of the IMS session that the communication entity 201 participates in.

It may be understood that in specific application, the first policy information indicates the protocol stack in a plurality of manners. For example, the first policy information may indicate the protocol stack in a manner of extending a new indication or parameter in a SIP header field, or may indicate the protocol stack in a manner of adding a new SIP header field, or may indicate the protocol stack in a declarative manner or an assignment manner, or may indicate the protocol stack in a manner whether to be encrypted, or may directly indicate the protocol stack for the data channel. The following describes the first policy information by using the following Example 1 to Example 5. However, it should be understood that a manner in which the first policy information indicates the protocol stack is not limited to the following examples.

Example 1: The first policy information is included in a Feature-Caps field of the 200 OK message.

For example, the first policy information indicates the protocol stack in the declarative manner. For example, content included in the 200 OK message may be shown in Table 7. In Table 7, the first policy information includes "g.3gpp.datachannel-unencrypted", and an indicated protocol stack is the second-type protocol stack, that is, an SCTP/UDP protocol stack. For another example, the content included in the 200 OK message may be shown in Table 8. In Table 8, the first policy information includes "g.3gpp.datachannel-encrypted", and an indicated protocol stack is the first-type protocol stack, that is, an SCTP/DTLS/UDP protocol stack.

**Table 7**

| | |
|---|---|
| | SIP/2.0 200 OK |
| | Via: SIP/2.0/UDP bobspc.biloxi.com:5060;branch=z9hG4bKnashds7;received=192.0.2.4 |
| | To: Bob <sip:bob@biloxi.com>;tag=2493k59kd |
| | From: Bob <sip:bob@biloxi.com>;tag=456248 |
| | Call-ID: 843817637684230@998sdasdh09 |
| | CSeq: 1826 REGISTER |
| | Contact: <sip:bob@192.0.2.4> |
| | Feature-Caps: **g.3gpp.datachannel-unencrypted** |
| | ... |

**Table 8**

| | |
|---|---|
| | SIP/2.0 200 OK |
| | Via: SIP/2.0/UDP bobspc.biloxi.com:5060;branch=z9hG4bKnashds7;received=192.0.2.4 |
| | To: Bob <sip:bob@biloxi.com>;tag=2493k59kd |
| | From: Bob <sip:bob@biloxi.com>;tag=456248 |
| | Call-ID: 843817637684230@998sdasdh09 |
| | CSeq: 1826 REGISTER |
| | Contact: <sip:bob@192.0.2.4> |
| | Feature-Caps: **g.3gpp.datachannel-encrypted** |
| | ... |

For example, the first policy information indicates the protocol stack in the assignment manner. For example, content included in the 200 OK message may be shown in Table 9. In Table 9, the first policy information includes "datachannel-encrypted="No"", and an indicated protocol stack is the second-type protocol stack, that is, an SCTP/UDP protocol stack. For another example, the content included in the 200 OK message may be shown in Table 10. In Table 10, the first policy information includes "datachannel-encrypted="Yes"", and an indicated protocol stack is the first-type protocol stack, that is, an SCTP/DTLS/UDP protocol stack.

**Table 9**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4> |
| Feature-Caps: **datachannel-encrypted="No"** |
| ... |

**Table 10**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4> |
| Feature-Caps: **datachannel-encrypted="Yes"** |
| ... |

Example 2: The first policy information is included in a Contact field of the 200 OK message.

For example, the first policy information indicates the protocol stack in the declarative manner. For example, content included in the 200 OK message may be shown in Table 11. In Table 11, the first policy information includes "g.3gpp.datachannel-unencrypted", and an indicated protocol stack is the second-type protocol stack, that is, an SCTP/UDP protocol stack. For another example, the content included in the 200 OK message may be shown in Table 12. In Table 12, the first policy information includes "g.3gpp.datachannel-encrypted", and an indicated protocol stack is the first-type protocol stack, that is, an SCTP/DTLS/UDP protocol stack.

**Table 11**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4>; **g.3gpp.datachannel-unencrypted** |
| ... |

**Table 12**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4>; **g.3gpp.datachannel-encrypted** |
| ... |

For example, the first policy information indicates the protocol stack in the assignment manner. For example, content included in the 200 OK message may be shown in Table 13. In Table 13, the first policy information includes "datachannel-encrypted="No"", and an indicated protocol stack is the second-type protocol stack, that is, an SCTP/UDP protocol stack. For another example, the content included in the 200 OK message may be shown in Table 14. In Table 14, the first policy information includes "datachannel-encrypted="Yes"", and an indicated protocol stack is the first-type protocol stack, that is, an SCTP/DTLS/UDP protocol stack.

**Table 13**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4>;**datachannel-encrypted="No"** |
| ... |

**Table 14**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4>;**datachannel-encrypted="Yes"** |
| ... |

In the foregoing example, the first policy information is included in a Feature-Caps field or a Contact field of the 200 OK message. However, in specific application, the first policy information may alternatively be included in a field other than the Feature-Caps field and the Contact field, and the declarative manner or the assignment manner may alternatively be in another form. This is not limited.

Example 3: The first policy information is included in a newly added field of the 200 OK message.

For example, the newly added field of the 200 OK message is "IMSDC-protocol". The content included in the 200 OK message may be shown in Table 15. In Table 15, the first policy information includes "UDP/SCTP", and an indicated protocol stack is the second-type protocol stack, that is, an SCTP/UDP protocol stack. Alternatively, the content included in the 200 OK message may be shown in Table 16. In Table 16, the first policy information includes "UDP/DTLS/SCTP", and an indicated protocol stack is the first-type protocol stack, that is, an SCTP/DTLS/UDP protocol stack.

**Table 15**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4> |
| **IMSDC-protocol: UDP/SCTP** |
| ... |

**Table 16**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4> |
| **IMSDC-protocol: UDP/DTLS/SCTP** |
| ... |

Example 4: The newly added field of the 200 OK message does not carry content related to the protocol stack for the data channel.

For example, the newly added field of the 200 OK message is "IMSDC-protocol". The content included in the 200 OK message may be shown in Table 17. In Table 17, the newly added field "IMSDC-protocol" does not carry any information, or the newly added field "IMSDC-protocol" is empty. In this case, the "IMSDC-protocol" may be considered as the first policy information, or it may be understood that the 200 OK message does not carry the first policy information. A protocol stack indicated by the 200 OK message shown in Table 17 is the first-type protocol stack, that is, an SCTP/DTLS/UDP protocol stack. Certainly, the protocol stack indicated by the 200 OK message shown in Table 17 may alternatively be the second-type protocol stack, that is, an SCTP/UDP protocol stack. This is not specifically limited in this application, and may be set based on a requirement.

**Table 17**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4> |
| **IMSDC-protocol:** |
| ... |

It should be understood that the "IMSDC-protocol" in this application is merely an example of the newly added field in the 200 OK message. In specific application, the newly added domain may also be named in another manner. This is not limited.

Example 5: The 200 OK message does not carry content related to the protocol stack for the data channel.

For example, the content included in the 200 OK message may be shown in Table 18. In Table 18, the 200 OK message does not carry content related to the protocol stack for the data channel. In this case, the 200 OK message may be considered as the first policy information, or it may be understood that the 200 OK message does not carry the first policy information. A protocol stack indicated by the 200 OK message shown in Table 18 is the first-type protocol stack, that is, an SCTP/DTLS/UDP protocol stack. Certainly, the protocol stack indicated by the 200 OK message shown in Table 18 may alternatively be the second-type protocol stack, that is, an SCTP/UDP protocol stack. This is not specifically limited in this application, and may be set based on a requirement.

**Table 18**

| |
|---|
| SIP/2.0 200 OK |
| Via: SIP/2.0/UDP bobspc.biloxi.com:5060;branch=z9hG4bKnashds7;received=192.0.2.4 |
| To: Bob <sip:bob@biloxi.com>;tag=2493k59kd |
| From: Bob <sip:bob@biloxi.com>;tag=456248 |
| Call-ID: 843817637684230@998sdasdh09 |
| CSeq: 1826 REGISTER |
| Contact: <sip:bob@192.0.2.4> |
| ... |

It should be understood that the S-CSCF entity may send the first policy information for a plurality of times, and the first policy information sent each time may indicate a different protocol stack, to adjust, based on a requirement, a protocol stack that is for the data channel and that is necessarily used by the communication entity 201 during negotiation of the data channel.

S500B: The S-CSCF entity sends second policy information to the communication entity 202. Correspondingly, the communication entity 202 receives the second policy information from the S-CSCF entity.

It may be understood that the S-CSCF entity in S500B and the S-CSCF entity in S500A may be a same entity or different entities. For example, for the communication scenario shown in FIG. 3A, the S-CSCF entity in S500B is the same as the S-CSCF entity in S500A, and both are S-CSCF entities in the IMS network 301. For the communication scenario shown in FIG. 3B, the S-CSCF entity in S500B is different from the S-CSCF entity in S500A, where one is the S-CSCF entity in the IMS network 311, and the other is the S-CSCF entity in the IMS network 312.

In this application, the second policy information is for the communication entity 202 to determine a protocol stack for establishing the data channel.

In a possible implementation, the operator configures the second policy information in the S-CSCF entity. After the communication entity 202 initiates a registration procedure to the communication network, the S-CSCF entity determines the second policy information, and sends the second policy information to the communication entity 202.

Optionally, second policy information corresponding to communication entities in a same communication network is the same, and second policy information corresponding to communication entities in different communication networks may be the same or different.

In a possible design, the second policy information may indicate that the first-type protocol stack or the second-type protocol stack is for the data channel of the IMS session that the communication entity 202 participates in. The data channel of the IMS session that the communication entity 202 participates in includes an ADC and/or a BDC. In other words, the second policy information may indicate, to the communication entity 202, a protocol stack that is for the data channel and that is necessarily used by the communication entity 202 during subsequent negotiation of the data channel. In this way, the communication entity 202 can determine, based on the second policy information and the SDP offer information, a protocol stack for establishing the data channel.

For example, the communication entity 202 may determine, according to a policy shown in Table 19, a protocol stack for establishing the data channel. For example, if the communication entity 201 offers to use the first-type protocol stack to establish the data channel, and the protocol stack indicated by the second policy information is the first-type protocol stack, the communication entity 202 determines to use the first-type protocol stack to establish the data channel. If the communication entity 201 offers to use the first-type protocol stack to establish the data channel, and the protocol stack indicated by the second policy information is the second-type protocol stack, the communication entity 202 determines to use the second-type protocol stack to establish the data channel. If the communication entity 201 offers to use the second-type protocol stack to establish the data channel, and the protocol stack indicated by the second policy information is the first-type protocol stack, the communication entity 202 determines to use the second-type protocol stack to establish the data channel. If the communication entity 201 offers to use the second-type protocol stack to establish the data channel, and the protocol stack indicated by the second policy information is the second-type protocol stack, the communication entity 202 determines to use the second-type protocol stack to establish the data channel.

**Table 19**

| Protocol stack offered by the communication entity 201 for the data channel | Protocol stack indicated by the second policy information | Protocol stack determined by the communication entity 202 for the data channel |
|---|---|---|
| First-type protocol stack | First-type protocol stack | First-type protocol stack |
| | Second-type protocol stack | Second-type protocol stack |
| Second-type protocol stack | First-type protocol stack | Second-type protocol stack |
| | Second-type protocol stack | Second-type protocol stack |

In a possible design, the second policy information is carried in a response message whose status code is 200 (for example, a 200 OK message). It should be understood that, in addition to this manner, the 200 response message may not carry the second policy information. In this case, the communication entity 202 may consider by default that the first-type protocol stack is for the data channel of the IMS session that the communication entity 202 participates in. Definitely, the communication entity 202 may also consider by default that the second-type protocol stack is for the data channel of the IMS session that the communication entity 202 participates in.

It may be understood that a manner in which the second policy information indicates the protocol stack is similar to the manner in which the first policy information indicates the protocol stack. For details, refer to the corresponding descriptions in S500A. Details are not described again.

It should be understood that the S-CSCF entity may send the second policy information for a plurality of times, and the second policy information sent each time may indicate a different protocol stack, to adjust, based on a requirement, a protocol stack that is for the data channel and that is necessarily used by the communication entity 202 during negotiation of the data channel.

It may be understood that a sequence of performing S500A and S500B is not limited in this application. For example, S500A may be performed before S500B, or S500B may be performed before S500A, or S500A and S500B may be simultaneously performed.

Actions of the S-CSCF entity, the communication entity 201, or the communication entity 202 in S500A and S500B may be performed by the processor 401 in the communication apparatus 40 shown in FIG. 4 by invoking the application program code stored in the memory 403. This is not limited in this application.

It may be understood that the foregoing content is described by using an example in which S500A and S500B are performed before S501. However, in specific application, S500A or S500B may be performed without depending on S501 and S502. In other words, this application further provides a communication method. The communication method may include S500A and/or S500B, and is used by a network device in a communication network (for example, an IMS network) to indicate, to a terminal in the communication network, a policy of a protocol stack for data channel to which the terminal is applicable.

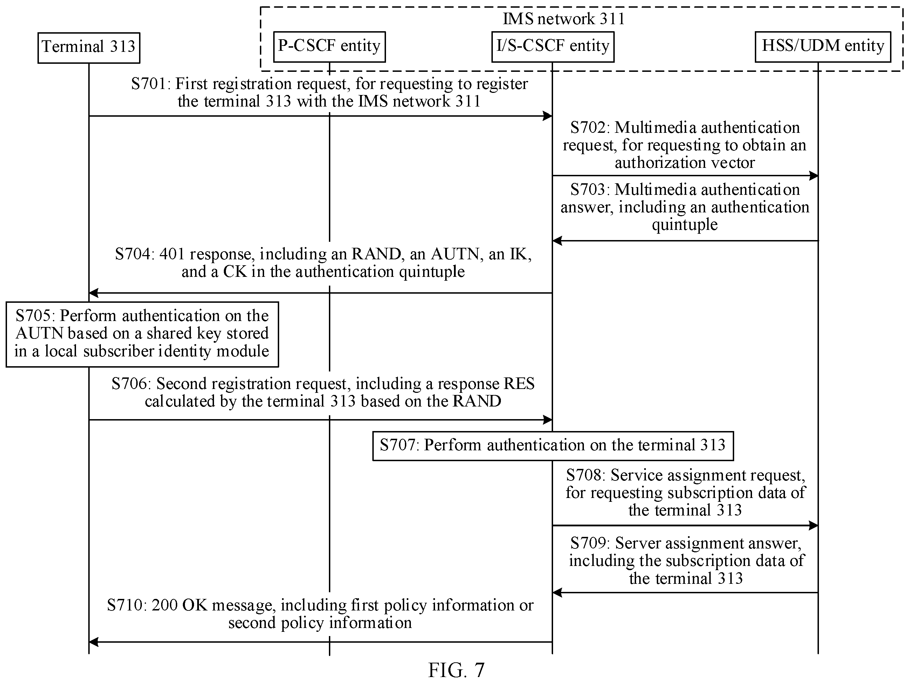

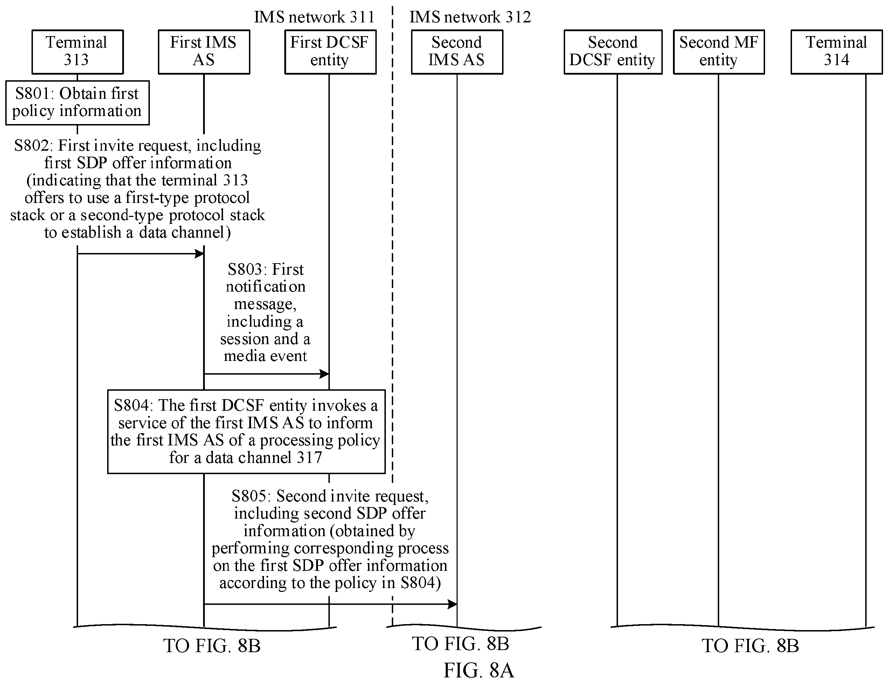

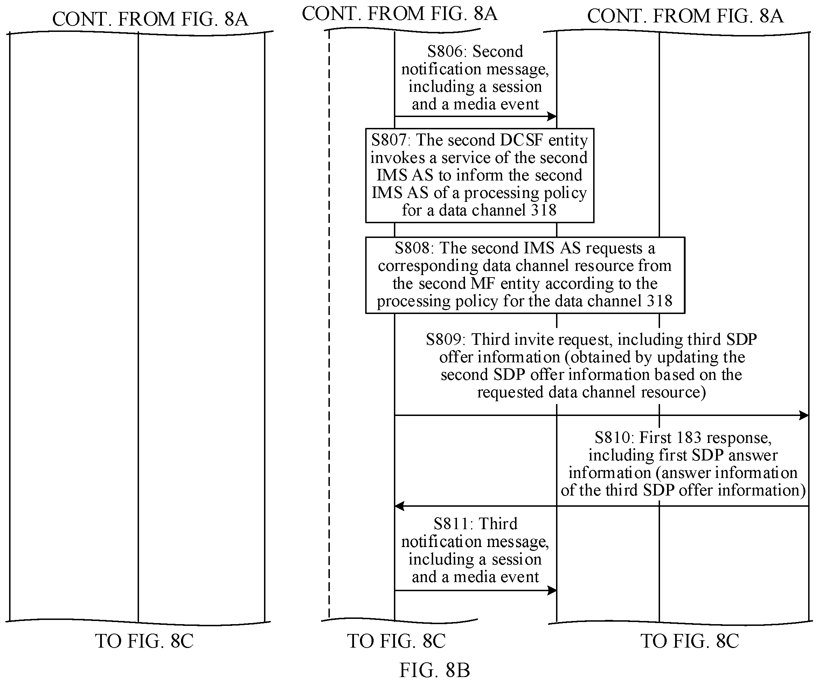

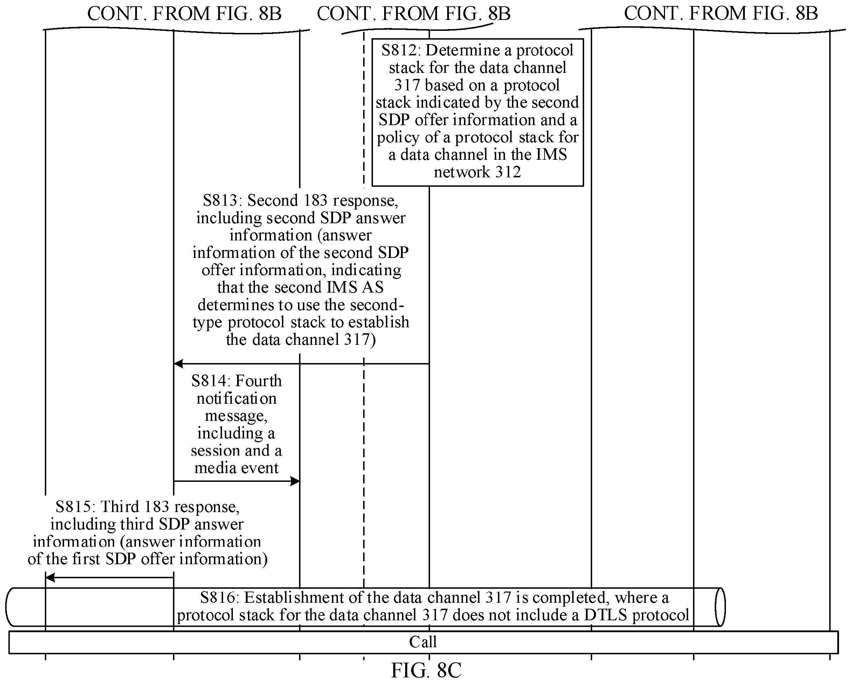

To better understand the communication method provided in this application, the following uses the communication scenario shown in FIG. 3C as an example to describe a complete procedure of the communication method provided in this application. It may be understood that descriptions of features in the method shown in FIG. 5, the method shown in FIG. 6, the following method shown in FIG. 7, and the following method shown in FIG. 8A to FIG. 8C may be mutually referenced.

First, a specific process in which the network device in the communication network (for example, the IMS network) indicates, to a communication entity, a policy of a protocol stack for a data channel to which the communication entity is applicable. It may be understood that a process in which the network device indicates, to each communication entity, the policy of the protocol stack for the data channel is similar. For ease of description, in this application, an example in which the I/S-CSCF entity in the IMS network 311 indicates, to the terminal 313, the policy of the protocol stack for the data channel is used for description. The I/S-CSCF entity may be understood as having functions of the I-CSCF entity and the S-CSCF entity. In the method shown in FIG. 7, the operations performed by the I/S-CSCF entity may be understood as being performed by modules having the S-CSCF function in the I/S-CSCF entity. The I/S-CSCF entity in the method shown in FIG. 7 may be replaced with the S-CSCF entity.

FIG. 7 shows another communication method according to this application. The communication method may include the following steps.

S701: The terminal 313 sends a first registration (REGISTER) request to the I/S-CSCF entity by using the P-CSCF entity. Correspondingly, the I/S-CSCF entity receives the first registration request from the terminal 313 by using the P-CSCF entity.

In this application, the first registration request may be for requesting to register the terminal 313 with the IMS network 311. For example, the first registration request includes an IP multimedia private identity (IP multimedia private identity, IMPI) of the terminal 313, a contact address of a user corresponding to the terminal 313, and other information.

For example, the terminal 313 initiates a registration procedure to the IMS network 311, and the first registration request sent by the terminal 313 may be routed to the I/S-CSCF entity by using the P-CSCF entity. In specific application, the I-CSCF and the S-CSCF may be deployed on different entities. In this case, the first registration request sent by the terminal 313 may be routed to the I-CSCF entity by using the P-CSCF entity. After receiving the first registration request, the I-CSCF entity sends a user authorization request (user authorization request, UAR) to the HSS/UDM entity. The UAR is configured to request an address of the S-CSCF entity. After receiving the UAR, the HSS/UDM entity sends a user authorization answer (user authorization answer, UAA) to the I-CSCF entity. The UAR includes the address or a capability set of the S-CSCF entity. After receiving the UAR, the I-CSCF entity determines an S-CSCF entity that needs to send the first registration request, and forwards the first registration request to the S-CSCF entity. It may be understood that, if the UAR includes the address of the S-CSCF entity, the I-CSCF entity forwards the first registration request to the S-CSCF entity; if the UAR includes a capability set of the S-CSCF entity, the I-CSCF entity queries a local set table of the S-CSCF entity, selects an S-CSCF entity that meets a capability set requirement indicated by the UAR, and forwards the first registration request to the S-CSCF entity.

S702: The I/S-CSCF entity sends a multimedia authentication request (multimedia authentication request, MAR) to the HSS/UDM entity. Correspondingly, the HSS/UDM entity receives the MAR from the I/S-CSCF entity.

In this application, the MAR is for requesting to obtain an authorization vector (authorization vector, AV).

S703: The HSS/UDM entity sends a multimedia authentication answer (multimedia authentication answer, MAA) to the I/S-CSCF entity. Correspondingly, the I/S-CSCF entity receives the MAA from the HSS/UDM entity.

In this application, the MAA may include an authentication quintuple. For example, the MAA includes an expected response (expected response, XRES), a random number (random challenge, RAND), an authentication token (authentication token, AUTN), an integrity key (integrity key, IK), and a cipher key (cipher key, CK).

After receiving the MAA, the I/S-CSCF entity may store the XRES for verifying an authentication response of the user subsequently.

S704: The I/S-CSCF entity sends a 401 response to the terminal 313 by using the P-CSCF entity. Correspondingly, the terminal 313 receives the 401 response from the I/S-CSCF entity.

In this application, the 401 response may include a RAND, an AUTN, an IK, and a CK.

S705: The terminal 313 performs authentication on the AUTN based on a shared key stored in a local subscriber identity module (subscriber identity module, ISIM).

It may be understood that, if the authentication performed by the terminal 313 on the AUTN succeeds, it indicates that the 401 response is from a real home network of the user.

S706: The terminal 313 sends a second registration request to the I/S-CSCF entity by using the P-CSCF entity. Correspondingly, the I/S-CSCF entity receives the second registration request from the terminal 313 by using the P-CSCF entity.

In this application, the second registration request includes a response (response, RES) calculated by the terminal 313 based on the RAND.

S707: The I/S-CSCF entity authenticates the terminal 313.

It may be understood that, after receiving the second registration request, the I/S-CSCF entity compares the previously stored XRES with the RES included in the second registration request. If the previously stored XRES matches the RES, the I/S-CSCF entity determines that the network authentication on the terminal 313 succeeds, and the I/S-CSCF entity performs S708.

S708: The I/S-CSCF entity sends a service assignment request (server assignment request, SAR) to the HSS/UDM entity. Correspondingly, the HSS/UDM entity receives the SAR from the I/S-CSCF entity.

In this application, the SAR is for requesting subscription data of the terminal 313.

S709: The HSS/UDM entity sends a service assignment answer (server assignment answer, SAA) to the I/S-CSCF entity. Correspondingly, the I/S-CSCF entity receives the SAA from the HSS/UDM entity.

In this application, the SAA includes the subscription data of the terminal 313.

S710: The I/S-CSCF entity sends a 200 OK message to the terminal 313 by using the P-CSCF entity. Correspondingly, the terminal 313 receives the 200 OK message from the I/S-CSCF entity.

The 200 OK message includes the subscription data of the terminal 313. The 200 OK message further includes the first policy information or the second policy information.

It may be understood that, after receiving the 200 OK message, the terminal 313 may negotiate the protocol stack for the data channel based on the first policy information or the second policy information.

Actions of the terminal 313 or the I/S-CSCF entity in S701 to S710 may be performed by the processor 401 in the communication apparatus 40 shown in FIG. 4 by invoking the application program code stored in the memory 403. This is not limited in this application.

Based on the method shown in FIG. 7, after initiating a registration procedure, the terminal 313 may obtain a policy of a protocol stack for a data channel by using the 200 OK message indicating a registration success, to determine, according to the policy, whether to offer the first-type protocol stack or the second-type protocol stack in the SDP offer information, or determine, according to the policy and an offer of an SDP offerer, a finally used protocol stack for the data channel.

The method shown in FIG. 7 is a process in which the I/S-CSCF entity in the IMS network 311 indicates the policy of the protocol stack for the data channel to the terminal 313. It should be understood that, the I/S-CSCF entity in the IMS network 312 may alternatively use logic similar to the method shown in FIG. 7 to indicate the policy of a protocol stack for the data channel to the terminal 314. For details, refer to the corresponding descriptions in FIG. 7. Details are not described herein again.

It may be understood that, after obtaining the policy of the protocol stack for the data channel, the terminal 313 may negotiate whether the protocol stack for the data channel of the IMS session that the terminal 313 participates in includes the DTLS protocol. A specific process of negotiating, by the terminal 313 and the IMS AS in the IMS network 312, whether the protocol stack for the data channel 317 includes the DTLS protocol is described below by using an example in which the terminal 313 is an SDP offerer, and the IMS AS in the IMS network 312 is an SDP answerer. The data channel 317 is an ADC or a BDC.

FIG. 8A to FIG. 8C show another communication method according to this application. The communication method may include the following steps.

S801: The terminal 313 obtains first policy information.

For a specific process of S801, refer to the corresponding descriptions in S500A, or the descriptions in S701 to S710.

S802: The terminal 313 sends a first invite request to the IMS AS in the IMS network 311 (hereinafter referred to as a first IMS AS) based on the first policy information. Correspondingly, the first IMS AS receives the first invite request from the terminal 313.

In this application, the first invite request includes first SDP offer information, indicating that the terminal 313 offers to use the first-type protocol stack or the second-type protocol stack to establish (or negotiate) the data channel. For specific descriptions of the first SDP offer information, refer to the descriptions of the SDP offer information in the method shown in FIG. 5 or FIG. 6. Optionally, the first SDP offer information further includes audio and video media description information.

It may be understood that if the first policy information indicates that the first-type protocol stack is for the data channel of the IMS session that the terminal 313 participates in, the terminal 313 indicates in the first SDP offer information that the terminal 313 offers to use the first-type protocol stack to establish the data channel 317. Content included in the first SDP offer information may be shown in Table 20. If the first policy information indicates that the second-type protocol stack is for the data channel of the IMS session that the terminal 313 participates in, the terminal 313 indicates in the first SDP offer information that the terminal 313 offers to use the second-type protocol stack to establish the data channel 317. Content included in the first SDP offer information may be shown in Table 21.

**Table 20**

| | |
|---|---|
| | a=ice-lite |
| | ... |
| | m=application 52719 **UDP/DTLS/SCTP** webrtc-datachannel |
| | c=IN IP4 192.0.2.1 |
| | b=AS:500 |
| | a=candidate:1 1 UDP 2130706431 192.0.2.1 52719 typ host |
| | a=ice-ufrag:9u4F |
| | a=ice-pwd:YH75Fviy6338Vbrhrlp8Yh |
| | a=max-message-size:1024 |
| | a=sctp-port:5002 |
| | a=setup:active |
| | a=fingerprint:SHA-1 |
| 4A:AD:B9:B1:3F:82:18:3B:54:02:12:DF:3E:5D:49:6B:19:E5:7C:AB | |
| | a=tls-id: abc3de65cddef001be9f |
| | a=dcmap:100 subprotocol="http" |
| | ... |

**Table 21**

| | |
|---|---|
| | a=ice-lite |
| | ... |
| | m=application 52719 **UDP/SCTP** webrtc-datachannel |
| | c=IN IP4 192.0.2.1 |
| | b=AS:500 |
| | a=candidate:1 1 UDP 2130706431 192.0.2.1 52719 typ host |
| | a=ice-ufrag:9u4F |
| | a=ice-pwd:YH75Fviy6338Vbrhrlp8Yh |
| | a=max-message-size:1024 |
| | a=sctp-port:5002 |
| | a=setup:active |
| | a=dcmap: 100 subprotocol="http" |
| | ... |

In a possible implementation, the first invite request sent by the terminal 313 is routed, by using an IMS core (for example, a P-CSCF entity and an I/S-CSCF entity in the IMS network 311), to the first IMS AS that provides a service for the terminal 313.

S803: The first IMS AS sends a first notification message to the DCSF entity in the IMS network 311 (hereinafter referred to as a first DCSF entity). Correspondingly, the first DCSF entity receives the first notification message from the first IMS AS.

In this application, the first notification message may include a session and a media event.

S804: The first DCSF entity invokes a service of the first IMS AS to inform the first IMS AS of a processing policy for the data channel 317.

For example, after receiving the first notification message, the first DCSF entity may determine whether the terminal 313 can establish the data channel and a policy for establishing the data channel, so that the first IMS AS performs, according to the policy, corresponding processing on an SDP media description corresponding to the data channel in the first SDP offer information.

S805: The first IMS AS sends a second invite request to the IMS AS in the IMS network 312 (hereinafter referred to as a second IMS AS). Correspondingly, the second IMS AS receives the second invite request from the first IMS AS.

In this application, the second invite request includes second SDP offer information. The second SDP offer information is SDP offer information obtained by the first IMS AS performing, according to the foregoing policy, corresponding processing on an SDP media description corresponding to the data channel in the first SDP offer information. It may be understood that "a=dcmap:100 subprotocol="http"" is information between the terminal 313 and the IMS network 312. Therefore, the second SDP offer information includes "a=dcmap:100 subprotocol="http"". It may be understood that the corresponding processing performed by the first IMS AS on the SDP media description corresponding to the data channel does not include modification on the protocol stack for the data channel.

In a possible implementation, the second invite request sent by the first IMS AS is routed to the second IMS AS by using an IMS core in the IMS network 311 and an IMS core in the IMS network 312.

S806: The second IMS AS sends a second notification message to the DCSF entity in the IMS network 312 (hereinafter referred to as a second DCSF entity). Correspondingly, the second DCSF entity receives the second notification message from the second IMS AS.

In this application, the second notification message may include a session and a media event.

S807: The second DCSF entity invokes a service of the second IMS AS to inform the second IMS AS of a processing policy for the data channel 318.

S808: The second IMS AS requests a corresponding data channel resource from the MF entity in the IMS network 312 (hereinafter referred to as the second MF entity) according to the processing policy for the data channel 318.

S809: The second IMS AS sends a third invite request to the terminal 314. Correspondingly, the terminal 314 receives the third invite request from the second IMS AS.

In this application, the third invite request includes third SDP offer information. The third SDP offer information is obtained by the second IMS AS by updating the second SDP offer information based on the requested data channel resource. It may be understood that "a=dcmap:100 subprotocol="http"" is information between the terminal 313 and the IMS network 312. Therefore, the third SDP offer information does not include "a=dcmap:100 subprotocol="http"".

In a possible implementation, the third invite request sent by the second IMS AS is routed to the terminal 314 by using the IMS core in the IMS network 312.

S810: The terminal 314 sends a first 183 response to the second IMS AS. Correspondingly, the second IMS AS receives the first 183 response from the terminal 314.

In this application, the first 183 response includes first SDP answer information. The first SDP answer information is answer information of the third SDP offer information.

It may be understood that, after S810, the data channel 318 is successfully established (or negotiated).

In a possible implementation, the first 183 response sent by the terminal 314 is routed to the second IMS AS by using the IMS core in the IMS network 312.

S811: The second IMS AS sends a third notification message to the second DCSF entity. Correspondingly, the second DCSF entity receives the third notification message from the second IMS AS.

In this application, the third notification message may include a session and a media event.

S812: The second IMS AS determines a protocol stack for the data channel 317 based on the protocol stack indicated by the second SDP offer information and the policy of the protocol stack for the data channel in the IMS network 312. For example, the second IMS AS determines to establish the data channel 317 by using the second-type protocol stack.

In this application, the policy of the protocol stack for the data channel in the IMS network 312 may be configured in the second IMS AS by an operator.

It may be understood that a process in which the second IMS AS determines the protocol stack for the data channel 317 is similar to the process in which the communication entity 202 determines the protocol stack for the data channel in the method shown in FIG. 5 or the method shown in FIG. 6. For details, refer to the foregoing corresponding descriptions. Details are not described herein again.

S813: The second IMS AS sends a second 183 response to the first IMS AS. Correspondingly, the first IMS AS receives the second 183 response from the second IMS AS.

In this application, the second 183 response includes second SDP answer information, and indicates that the second IMS AS determines to use the second-type protocol stack to establish the data channel 317. The second SDP answer information may be an information answer to the second SDP offer information. For example, content included in the second SDP answer information may be shown in Table 22. For other descriptions of the second SDP answer information, refer to the descriptions of the SDP answer information in FIG. 5 or FIG. 6.

**Table 22**

| | |
|---|---|
| | a=ice-lite |
| | ... |
| | m=application 23115 UDP/SCTP webrtc-datachannel |
| | c=IN IP4 192.0.12.11 |
| | b=AS:500 |
| | a=candidate:1 1 UDP 2130706431 192.0.12.11 23115 typ host |
| | a=ice-ufrag:9uB6 |
| | a=ice-pwd:YH75Fviy6338Vbrhrlae9f |
| | a=max-message-size: 1024 |
| | a=sctp-port:5001 |
| | a=setup:passive |
| | a=dcmap:100 subprotocol="http" |
| | ... |

In a possible implementation, the second 183 response sent by the second IMS AS may be routed to the first IMS AS by using the IMS core in the IMS network 312 and the IMS core in the IMS network 311.

S814: The first IMS AS sends a fourth notification message to the first DCSF entity. Correspondingly, the first DCSF entity receives the fourth notification message from the first IMS AS.

In this application, the fourth notification message may include a session and a media event.

S815: The first IMS AS sends a third 183 response to the terminal 313. Correspondingly, the terminal 313 receives the third 183 response from the first IMS AS.

In this application, the third 183 response includes third SDP answer information. The third SDP answer information is answer information of the first SDP offer information.

After S815, an SIP PRACK/200 procedure may be continued to be performed.

S816: Establishment of the data channel 317 between the terminal 313 and the second MF entity is completed, where a protocol stack for the data channel 317 does not include a DTLS protocol.

After S816, an SIP 180/PRACK/200/ACK procedure may be continued to be completed. At this time, the IMS call is connected.

According to the method shown in FIG. 8A to FIG. 8C, the terminal 313 and the second IMS AS may negotiate to establish the data channel 317. In a process of negotiating to establish the data channel 317, the terminal 313 and the second IMS AS may negotiate whether the protocol stack for the data channel 317 includes the DTLS protocol. In the method shown in FIG. 8A to FIG. 8C, the protocol stack for the data channel 317 does not include the DTLS protocol. Therefore, data transmitted in the data channel 317 does not need to be processed based on the DTLS protocol, so that a quantity of encryption times can be reduced, data transmission efficiency can be improved, and a data transmission delay can be shortened.

It may be understood that the method shown in FIG. 8A to FIG. 8C is a process of negotiating, between the terminal 313 and the second IMS AS, whether the protocol stack for the data channel 317 includes the DTLS protocol. In specific application, the terminal 313 and the first IMS AS may also negotiate whether the protocol stack for the data channel includes the DTLS protocol, the first IMS AS and the terminal 314 may also negotiate whether the protocol stack for the data channel includes the DTLS protocol, and the second IMS AS and the terminal 314 may also negotiate whether the protocol stack for the data channel includes the DTLS protocol. The foregoing process is similar to the logic of the method shown in FIG. 8A to FIG. 8C, and details are not described again.

Embodiments mentioned above in this application may be combined when the solutions do not conflict. This is not limited.

The solutions provided in this application are described above mainly from a perspective of interaction between entities. Correspondingly, this application further provides a communication apparatus. The communication apparatus may be the communication entity 201 in the foregoing method embodiment, or an apparatus including the communication entity 201, or a component that can be used in the communication entity 201. Alternatively, the communication apparatus may be the communication entity 202 in the foregoing method embodiment, or an apparatus including the communication entity 202, or a component that can be used in the communication entity 202. Alternatively, the communication apparatus may be the CSCF entity (for example, an S-CSCF entity or an I/S-CSCF entity) in the foregoing method embodiments, or an apparatus including the foregoing CSCF entity, or a component that may be for the CSCF entity. It may be understood that, to implement the foregoing functions, the communication entity 201, the communication entity 202, the CSCF entity, or the like includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

In this application, the communication entity 201, the communication entity 202, or the CSCF entity may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, another division manner may be used.

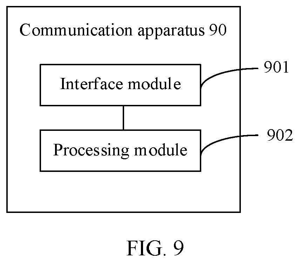

For example, when functional modules are obtained through division in an integrated manner, FIG. 9 is a diagram of a structure of a communication apparatus 90. The communication apparatus 90 includes an interface module 901 and a processing module 902. The interface module 901 may also be referred to as an interface unit, and is configured to perform a sending operation and a receiving operation. For example, the interface module may be an interface circuit, a transceiver device, a transceiver, a communication interface, or the like. The processing module 902 may also be referred to as a processing unit, is configured to perform an operation other than the sending operation and the receiving operation. For example, the processing module may be a processing circuit, a processor, or the like.

In some embodiments, the communication apparatus 90 may further include a storage module (not shown in FIG. 9), configured to store program instructions and data.

For example, the communication apparatus 90 is configured to implement functions of the communication entity 202. For example, the communication apparatus 90 is the communication entity 202 in the embodiment shown in FIG. 5 or the embodiment shown in FIG. 6, or the terminal 313 in the embodiment shown in FIG. 7, or the second IMS AS in the embodiment shown in FIG. 8A to FIG. 8C.

The interface module 901 is configured to receive SDP offer information from a second communication entity. The SDP offer information indicates that the second communication entity offers to use a first-type protocol stack or a second-type protocol stack to establish a data channel. The data channel is associated with an IMS session between the communication apparatus 90 and the second communication entity. The first-type protocol stack includes a DTLS protocol, and the second-type protocol stack does not include the DTLS protocol. For example, the interface module 901 may be configured to perform S501.

The processing module 902 is configured to send SDP answer information to the second communication entity based on the SDP offer information by using the interface module 901. The SDP answer information indicates that the communication apparatus 90 determines to use the second-type protocol stack to establish the data channel. For example, the processing module 902 may be configured to perform S502.

In a possible implementation, the first-type protocol stack is an SCTP/DTLS/UDP protocol stack or a UDP/DTLS/SCTP protocol stack, and the second-type protocol stack is an SCTP/UDP protocol stack or a UDP/SCTP protocol stack.

In a possible implementation, the SDP offer information includes first indication information, and the first indication information indicates that the first-type protocol stack or the second-type protocol stack is used to establish the data channel.

In a possible implementation, the SDP offer information includes an m line corresponding to the data channel, and the m line includes the first indication information.

In a possible implementation, the first indication information indicates that the first-type protocol stack is used to establish the data channel, and the first indication information is "UDP/DTLS/SCTP" or "SCTP/DTLS/UDP"; or the first indication information indicates that the second-type protocol stack is used to establish the data channel, and the first indication information is "UDP/SCTP" or "SCTP/UDP".

In a possible implementation, the SDP answer information includes second indication information, and the second indication information indicates that it is determined that the second-type protocol stack is used to establish the data channel.

In a possible implementation, the SDP answer information includes an m line corresponding to the data channel, and the m line included in the SDP answer information includes the second indication information.

In a possible implementation, the second indication information is "UDP/SCTP" or "SCTP/UDP".

In a possible implementation, the interface module 901 is further configured to receive policy information from a call session control function entity, where the policy information is for the communication apparatus 90 to determine a protocol stack for establishing the data channel.

In a possible implementation, the policy information is carried in a response message whose status code is 200.

In a possible implementation, the policy information is included in a Feature-Caps field or a Contact field of the response message.

In a possible implementation, the communication apparatus 90 determines, based on the first-type protocol stack or the second-type protocol stack offered by the second communication entity and the policy information, to use the second-type protocol stack to establish the data channel.

In a possible implementation, the data channel is an auxiliary data channel or a standalone data channel.

When functions of the communication entity 202 are implemented, for another function that can be implemented by the communication apparatus 90, refer to related descriptions of the embodiment shown in FIG. 5, the embodiment shown in FIG. 6, the embodiment shown in FIG. 7, or the embodiment shown in FIG. 8A to FIG. 8C. Details are not described again.

Alternatively, for example, the communication apparatus 90 is configured to implement functions of the communication entity 201. For example, the communication apparatus 90 is the communication entity 201 in the embodiment shown in FIG. 5 or the embodiment shown in FIG. 6, or the terminal 313 in the embodiment shown in FIG. 7 or the embodiment shown in FIG. 8A to FIG. 8C.

The interface module 901 is configured to send the SDP offer information to a first communication entity. The SDP offer information indicates that the communication apparatus 90 offers to use the first-type protocol stack or the second-type protocol stack to establish a data channel, and the data channel is associated with an IMS session between the first communication entity and the communication apparatus 90. The first-type protocol stack includes a DTLS protocol, and the second-type protocol stack does not include the DTLS protocol. For example, the interface module 901 may be configured to perform S501.

The interface module 901 is further configured to receive SDP answer information from the first communication entity. The SDP answer information indicates that the first communication entity determines to use the second-type protocol stack to establish the data channel. For example, the interface module 901 may be configured to perform S502.

In a possible implementation, the first-type protocol stack is an SCTP/DTLS/UDP protocol stack or a UDP/DTLS/SCTP protocol stack, and the second-type protocol stack is an SCTP/UDP protocol stack or a UDP/SCTP protocol stack.

In a possible implementation, the SDP offer information includes first indication information, indicating that the first-type protocol stack or the second-type protocol stack is used to establish the data channel.

In a possible implementation, the SDP offer information includes an m line corresponding to the data channel, and the m line includes the first indication information.

In a possible implementation, the first indication information indicates that the first-type protocol stack is used to establish the data channel, and the first indication information is "UDP/DTLS/SCTP" or "SCTP/DTLS/UDP"; or the first indication information indicates that the second-type protocol stack is used to establish the data channel, and the first indication information is "UDP/SCTP" or "SCTP/UDP".

In a possible implementation, the SDP answer information includes second indication information, and the second indication information indicates that it is determined that the second-type protocol stack is used to establish the data channel.

In a possible implementation, the SDP answer information includes an m line corresponding to the data channel, and the m line included in the SDP answer information includes the second indication information.

In a possible implementation, the second indication information is "UDP/SCTP" or "SCTP/UDP".

In a possible implementation, the interface module 901 is further configured to receive policy information from a call session control function entity, where the policy information is for the communication apparatus 90 to determine a protocol stack that is offered to be used to establish the data channel.

In a possible implementation, the policy information is carried in a response message whose status code is 200.

In a possible implementation, the policy information is included in a Feature-Caps field or a Contact field of the response message.

In a possible implementation, the data channel is an auxiliary data channel or a standalone data channel.

When functions of the communication entity 201 are implemented, for another function that can be implemented by the communication apparatus 90, refer to related descriptions of the embodiment shown in FIG. 5, the embodiment shown in FIG. 6, the embodiment shown in FIG. 7, or the embodiment shown in FIG. 8A to FIG. 8C. Details are not described again.

Alternatively, for example, the communication apparatus 90 is configured to implement functions of the CSCF entity. The communication apparatus 90 is, for example, the S-CSCF entity in the embodiment shown in FIG. 6 or the I/S-CSCF entity in the embodiment shown in FIG. 7.

The processing module 902 is configured to determine policy information. The policy information is for the communication entity to determine a protocol stack that is offered to be used to establish a data channel, or for the communication entity to determine a protocol stack for establishing a data channel, where the data channel is associated with an IMS session that the communication entity participates in.

The interface module 901 is configured to send the policy information to the communication entity. For example, the interface module 901 may be configured to perform S500A and/or S500B.

In a possible implementation, the policy information is carried in a response message whose status code is 200.

In a possible implementation, the policy information is included in a Feature-Caps field or a Contact field of the response message.

In a possible implementation, the data channel includes an auxiliary data channel and/or a standalone data channel.

When functions of the CSCF entity are implemented, for another function that can be implemented by the communication apparatus 90, refer to the related descriptions of the embodiment shown in FIG. 6 or the embodiment shown in FIG. 7. Details are not described again herein.

In a simple embodiment, a person skilled in the art may figure out that the communication apparatus 90 may be in the form shown in FIG. 4. For example, the processor 401 in FIG. 4 may invoke the computer-executable instructions stored in the memory 403, to cause the communication apparatus 90 to perform the method in the foregoing embodiments.

For example, functions/implementation processes of the interface module 901 and the processing module 902 in FIG. 9 may be implemented by the processor 401 in FIG. 4 by invoking the computer-executable instructions stored in the memory 403. Alternatively, functions/implementation processes of the processing module 902 in FIG. 9 may be implemented by the processor 401 in FIG. 4 by invoking the computer-executable instruction stored in the memory 403, and functions/implementation processes of the interface module 901 in FIG. 9 may be implemented by the communication interface 404 in FIG. 4.

For example, functions/implementation processes of the interface module 901 and the processing module 902 in FIG. 9 may be implemented by the processor 401 in FIG. 4 by invoking the computer-executable instructions stored in the memory 403. Alternatively, functions/implementation processes of the processing module 902 in FIG. 9 may be implemented by the processor 401 in FIG. 4 by invoking the computer-executable instruction stored in the memory 403, and functions/implementation processes of the interface module 901 in FIG. 9 may be implemented by the communication interface 404 in FIG. 4.

It may be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, the ASIC, the SoC, the FPGA, the PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may alternatively include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or some of the procedures in the foregoing method embodiments may be implemented by the computer instructions instructing related hardware (for example, a computer, a processor, a communication entity, or a CSCF entity). The program may be stored in the computer-readable storage medium or the computer program product.

Optionally, this application further provides a communication system, including at least two of the communication entity 201, the communication entity 202, and the CSCF entity in the foregoing embodiments.

Optionally, this application further provides a communication system, including the terminal 313 and the second IMS AS in the foregoing embodiments.

Optionally, this application further provides a communication system, including the foregoing terminal 313 and I/S-CSCF entity.

The foregoing descriptions about implementations allow a person skilled in the art to understand that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving session description protocol SDP offer information, wherein the SDP offer information indicates that a second communication entity offers to use a first-type protocol stack or a second-type protocol stack to establish a data channel, the data channel is associated with an internet protocol multimedia subsystem IMS session between a first communication entity and the second communication entity, the first-type protocol stack comprises a datagram transport layer security DTLS protocol, and the second-type protocol stack does not comprise the DTLS protocol; and
sending SDP answer information based on the SDP offer information, wherein the SDP answer information indicates that the first communication entity determines to use the second-type protocol stack to establish the data channel.

2. The method according to claim 1, wherein the first-type protocol stack is a user datagram protocol UDP/DTLS/stream control transmission protocol SCTP protocol stack, and the second-type protocol stack is a UDP/SCTP protocol stack.

3. The method according to claim 1 or 2, wherein the SDP offer information comprises first indication information, and the first indication information indicates that the first-type protocol stack or the second-type protocol stack is used to establish the data channel.

4. The method according to claim 3, wherein the SDP offer information comprises an m line corresponding to the data channel, and the m line comprises the first indication information.

5. The method according to claim 3 or 4, wherein
the first indication information indicates that the first-type protocol stack is used to establish the data channel, and the first indication information is "UDP/DTLS/SCTP" or "SCTP/DTLS/UDP"; or
the first indication information indicates that the second-type protocol stack is used to establish the data channel, and the first indication information is "UDP/SCTP" or "SCTP/UDP".

6. The method according to any one of claims 1 to 5, wherein the SDP answer information comprises second indication information, and the second indication information indicates that it is determined that the second-type protocol stack is used to establish the data channel.

7. The method according to claim 6, wherein the SDP answer information comprises an m line corresponding to the data channel, and the m line comprised in the SDP answer information comprises the second indication information.

8. The method according to claim 6 or 7, wherein the second indication information is "UDP/SCTP" or "SCTP/UDP".

9. The method according to any one of claims 1 to 8, wherein the method further comprises:
receiving policy information, wherein the policy information is for the first communication entity to determine a protocol stack for establishing the data channel.

10. The method according to claim 9, wherein the policy information is carried in a response message whose status code is 200.

11. The method according to claim 10, wherein the policy information is comprised in a Feature-Caps field or a Contact field of the response message.

12. The method according to any one of claims 9 to 11, wherein the first communication entity determines, based on the first-type protocol stack or the second-type protocol stack offered by the second communication entity and the policy information, to use the second-type protocol stack to establish the data channel.

13. The method according to any one of claims 1 to 12, wherein the data channel is an auxiliary data channel or a standalone data channel.

14. A communication method, wherein the method comprises:
sending session description protocol SDP offer information, wherein the SDP offer information indicates that a second communication entity offers to use a first-type protocol stack or a second-type protocol stack to establish a data channel, the data channel is associated with an internet protocol multimedia subsystem IMS session between a first communication entity and the second communication entity, the first-type protocol stack comprises a datagram transport layer security DTLS protocol, and the second-type protocol stack does not comprise the DTLS protocol; and
receiving SDP answer information, wherein the SDP answer information indicates that the first communication entity determines to use the second-type protocol stack to establish the data channel.

15. The method according to claim 14, wherein the first-type protocol stack is a user datagram protocol UDP/DTLS/stream control transmission protocol SCTP protocol stack, and the second-type protocol stack is a UDP/SCTP protocol stack.

16. The method according to claim 14 or 15, wherein the SDP offer information comprises first indication information, and the first indication information indicates that the first-type protocol stack or the second-type protocol stack is used to establish the data channel.

17. The method according to claim 16, wherein the SDP offer information comprises an m line corresponding to the data channel, and the m line comprises the first indication information.

18. The method according to claim 16 or 17, wherein
the first indication information indicates that the first-type protocol stack is used to establish the data channel, and the first indication information is "UDP/DTLS/SCTP" or "SCTP/DTLS/UDP"; or
the first indication information indicates that the second-type protocol stack is used to establish the data channel, and the first indication information is "UDP/SCTP" or "SCTP/UDP".

19. The method according to any one of claims 14 to 18, wherein the SDP answer information comprises second indication information, and the second indication information indicates that it is determined that the second-type protocol stack is used to establish the data channel.

20. The method according to claim 19, wherein the SDP answer information comprises an m line corresponding to the data channel, and the m line comprised in the SDP answer information comprises the second indication information.

21. The method according to claim 19 or 20, wherein the second indication information is "UDP/SCTP" or "SCTP/UDP".

22. The method according to any one of claims 14 to 21, wherein the method further comprises:
receiving policy information, wherein the policy information is for the second communication entity to determine a protocol stack that is offered to be used to establish the data channel.

23. The method according to claim 22, wherein the policy information is carried in a response message whose status code is 200.

24. The method according to claim 23, wherein the policy information is comprised in a Feature-Caps field or a Contact field of the response message.

25. The method according to any one of claims 14 to 24, wherein the data channel is an auxiliary data channel or a standalone data channel.

26. A communication method, wherein the method comprises:
determining policy information, wherein the policy information is for a communication entity to determine a protocol stack that is offered to be used to establish a data channel, or for a communication entity to determine a protocol stack for establishing a data channel, and the data channel is associated with an internet protocol multimedia subsystem IMS session that the communication entity participates in; and
sending the policy information.

27. The method according to claim 26, wherein the policy information is carried in a response message whose status code is 200.

28. The method according to claim 27, wherein the policy information is comprised in a Feature-Caps field or a Contact field of the response message.

29. The method according to any one of claims 26 to 28, wherein the data channel comprises an auxiliary data channel and/or a standalone data channel.

30. A communication apparatus, comprising a unit or a module configured to perform the method according to any one of claims 1 to 13, comprising a unit or a module configured to perform the method according to any one of claims 14 to 25, or comprising a unit or a module configured to perform the method according to any one of claims 26 to 29.

31. A communication apparatus, comprising a processor, wherein the processor is coupled to a memory, the memory is configured to store a program or instructions, and when the program or the instructions are executed by the processor, the apparatus is caused to perform the method according to any one of claims 1 to 13, perform the method according to any one of claims 14 to 25, or perform the method according to any one of claims 26 to 29.

32. A computer-readable storage medium, wherein the computer-readable storage medium stores a computer program or instructions, and when the computer program or the instructions are executed, a computer is caused to perform the method according to any one of claims 1 to 13, the method according to any one of claims 14 to 25, or the method according to any one of claims 26 to 29.

33. A computer program product, wherein the computer program product comprises computer program code, and when the computer program code is run on a computer, the computer is caused to implement the method according to any one of claims 1 to 13, implement the method according to any one of claims 14 to 25, or implement the method according to any one of claims 26 to 29.

34. A communication system, comprising an apparatus configured to perform the method according to any one of claims 1 to 13 and an apparatus configured to perform the method according to any one of claims 14 to 25.

35. The communication system according to claim 34, wherein the communication system further comprises an apparatus configured to perform the method according to any one of claims 26 to 29.
